# EUROPÄISCHE PATENTSCHRIFT

(11) **EP 3 580 108 B1**
(45) Veröffentlichungstag und Bekanntmachung des Hinweises auf die Patenterteilung: **15.03.2023**
(21) Anmeldenummer: 18704507.5
(22) Anmeldetag: 06.02.2018
(51) Int. Cl.: B61D 17/00, B61D 17/04

(54) **WAGENKASTEN FÜR EIN SCHIENENFAHRZEUG**
CAR BODY FOR A RAIL VEHICLE
CAISSE DE WAGON POUR UN VÉHICULE FERROVIAIRE

(30) Priorität: 09.02.2017 DE 102017102552
(43) Veröffentlichungstag der Anmeldung: 18.12.2019
(73) Patentinhaber: CRRC Qingdao Sifang Co., Ltd., Qingdao, Shandong 266111 (CN); CG Rail - Chinesisch-Deutsches Forschungs - Und Entwicklungszentrum Für Bahn - Und Verkehrstechnik Dresden GmbH, 01067 Dresden (DE)
(72) Erfinder: DING, Sansan, 266111 Qingdao (CN); DU, Jian, Qingdao Shandong 266111 (CN); TU, Qinshu, Qingdao Shandong 266111 (CN); LIU, Chuangang, Qingdao Shandong 266111 (CN); LI, Hong, Qingdao Shandong 266111 (CN); SHI, Yunqi, Qingdao Shandong 266111 (CN); HUFENBACH, Werner, 01324 Dresden (DE); ULBRICHT, Andreas, 01324 Dresden (DE); LIANG, Jianying, 266111 Qingdao (CN)
(74) Vertreter: Prinz & Partner mbB
(86) Internationale Anmeldenummer: PCT/EP2018/052921
(87) Internationale Veröffentlichungsnummer: WO 2018/146083

(56) Entgegenhaltungen:
- EP-A1- 0 836 976
- EP-A1- 2 660 119
- EP-A2- 1 138 567
- WO-A1-2016/135092

## Beschreibung

Die Erfindung betrifft einen Wagenkasten für ein Schienenfahrzeug zur Personenbeförderung, insbesondere für den Einsatz im Kurzstreckenbetrieb, wie bei U- und S-Bahnen, bei denen die Schienenfahrzeuge oder die aus ihnen gebildeten Zugeinheiten in kurzen Intervallen beschleunigt und abgebremst werden müssen.

Bekannte Wagenkästen von Schienenfahrzeugen bestehen in konventioneller Bauweise aus einer röhrenförmigen Konstruktion mit zwei Stirnwänden, die im Regelfall als Übergang zu einem benachbarten Wagenkasten ausgebildet sind. Alternativ kann die Stirnwand auch als Führerhaus ausgebildet sein.

In konventioneller Bauweise besteht der Wagenkasten aus einem Untergestell (auch Unterboden genannt), zwei Seitenwänden sowie einem Dach. Dabei weisen die Baugruppen, insbesondere die Seitenwände und das Dach, eine tragende, skelettartige Tragstruktur auf, bei der Stahlleichtbauprofile miteinander oder mit einem Dünnblech, das die äußere Verkleidung bildet, mit bekannten Schweißverfahren verbunden sind.

Für die Tragstruktur und die Verkleidung werden neben Stahl- und Stahlleichtbauprofilen und Dünnblechen zunehmend leichte und korrosionsresistente Werkstoffe aus Aluminium oder Aluminiumlegierungen verwendet. Dabei wird das Aluminium zum Erhalt einer höheren Stabilität als Kammerprofil verbaut. Allerdings weisen auch Aluminium-Bauteile bei falschem Einbau eine Anfälligkeit für Korrosion auf.

Nachteile dieser Differenzialbauweise sind der hohe Aufwand für die Fertigung der Elemente der Tragstruktur und der Verkleidung und die hohe Korrosionsanfälligkeit durch die form- oder stoffschlüssige Verbindung der Stahl- oder Stahlleichtbauteile untereinander oder mit anderen Werkstoffen. So kommt es in Folge der Kondenswasserbildung insbesondere im Bereich der Fenster- und Türausschnitte in den Seitenwänden zu starker Korrosion, so dass die tragenden Baugruppen im Bereich der Seitenwände beziehungsweise im Übergangsbereich zwischen Dach und Seitenwand regelmäßig nach ca. 15 bis 17 Jahren ausgetauscht werden müssen.

Neben der klassischen Skelettbauweise, insbesondere für die Baugruppen Dach und Seitenwand, gibt es seit Jahren Bemühungen, alternative Konstruktionsprinzipien in die Praxis überzuleiten.

So ist aus der DE 196 19 212 A1 der Wagenkasten eines Schienenfahrzeuges bekannt, der im Wesentlichen aus horizontalen und vertikalen Wandungen besteht, wobei die horizontalen Wandungen dem Bilden eines Bodens sowie eines Daches dienen und die vertikalen, insbesondere Seitenwände bildenden Wandungen, den Einbau mindestens eines Fensters und einer Eingangstür durch entsprechende Ausschnitte ermöglichen.

Dabei werden für die Fertigung des Wagenkastens Module verwendet, die aus faserverstärktem Kunststoff gebildet sind und die im Schnitt senkrecht zur Wagenkastenlängsachse jeweils hälftige Module bilden.

Jeweils zwei dieser komplementär angeordneten und in der Fahrzeugquermitte zusammentreffenden, hälftigen Module bilden dabei eine Längssektion.

Der gesamte Wagenkasten besteht aus einer Vielzahl von jeweils zwei hälftigen Modulen, die untereinander mit geeigneten Mitteln verbunden sind. Die hälftigen Module weisen dabei besonders bevorzugt eine Innenwand und eine Außenwand auf, die eine mittlere Schicht oder Kernschicht umgeben. Bevorzugt sind die Innenwand und die Außenwand aus faserverstärktem Kunststoff gefertigt.

Besonders bevorzugt umfassen die faserverstärkten Kunststoffe Glas-, Kohlenstoff-, Basalt-, Textil-, Aramid- und / oder Naturfasern. Besonders bevorzugt sind diese Fasern von einer Matrix aus thermoplastischen oder duroplastischen Kunststoffen umgeben. Besonders bevorzugt umfassen die als Matrix vorgesehenen duroplastischen Kunststoffe Epoxidharze, ungesättigte Polyesterharze, PU-Harze, Vinylesterharze oder Phenolharze.

Ein Nachteil dieser Konstruktionsbauweise resultiert aus der Größe der dreidimensional ausgebildeten Module. Zudem bilden die aneinandergrenzenden Modulhälften im Bereich des Wagenkastenbodens und im Dachbereich einen durchgehenden Stumpfstoß, so dass bei üblichen Belastungssituationen, bei denen der Wagenkasten auf Toision beansprucht wird, mit einer frühzeitigen Ermüdung des Werkstoffes in dieser Fügezone gerechnet werden muss.

Aus der GB 2 030 934 A ist eine Karosserie für ein Fahrzeug und ein mit dieser Karosserie ausgestattetes Fahrzeug bekannt.

Dabei besteht die Karosserie aus modularen Teilsegmenten, die aneinandergrenzend so miteinander verbunden sind, dass die Segmentmodule zugleich einen Teilbereich des Karosseriedaches bilden. Dazu weisen die Teilsegmente eine abgewinkelte Verlängerung auf.

Um der Karosserie die notwendige Festigkeit zu verleihen, werden die einzelnen Module jeweils in überlagerter Form montiert. Durch die Verwendung klassischer Konstruktionswerkstoffe, wie Stahl, kommt es in dem Überlapp- bzw. Stoßbereich der aneinandergrenzenden Teilsegmente bzw. Segmentmodule zu starken Korrosionserscheinungen. Auch erfordert die Vorfertigung der dreidimensional geformten Teilsegmente und der sie verbindenden Profile eine hohe Fertigungsgenauigkeit. Beim Verschweißen der Teilsegmente untereinander, beziehungsweise mit den sie verbindenden Profilen, werden vergleichsweise große Wärmemengen in die Konstruktionsteile eingebracht, was zu stärkerem Verzug und daraus resultierenden Fertigungsungenauigkeiten führt. Ebenso wird durch die vergleichsweise große Wärmeeinflusszone das Gefüge geschwächt. Durch den ungewollten Wärmeeintrag kommt es zudem regelmäßig zum Ausbeulen oder Verformen der dünnwandigen, die Wagenkastenaußenhaut bildenden Segmentmodule. Diese Bereiche mit den signifikanten Verformungen müssen durch weiteren Wärmeeintrag und den Eintrag mechanischer Energie (Normalglühen, Spannungsarmglühen, Richten) aufwendig nachgearbeitet werden. Zudem ist es im Regelfall erforderlich, die sichtbaren Außenflächen aufwendig zu spachteln und zu verschleifen, um einen ansprechenden Gesamteindruck des Wagenkastens zu realisieren.

Falls die Segmentmodule untereinander beziehungsweise mit den angrenzenden Profilen durch Schraub- oder Nietverbindungen verbunden werden, so wird dadurch die Gefahr der Spaltkorrosion in der Verbindungszone stark gefördert. Da zudem die verwendeten Verbindungssegmente und die Segmentmodule aus unterschiedlichen Stählen bzw. Stahllegierungen bestehen, kann es zu frühzeitiger Kontaktkorrosionsbildung kommen.

Die EP 0 926 036 A1 beschreibt einen Wagenkasten für Hochgeschwindigkeitszüge in Differentialbauweise, der aus einer Bodenplatte, einem Dach, Stirnwänden und Seitenwänden gebildet wird, wobei eine Seitenwand aus entlang der Wagenkastenlängsachse angeordneten Sektionen gebildet werden kann, die jeweils aus einem einteiligen Hohlkammerprofil aus faserverstärktem Kunststoff bestehen, wobei das Hohlkammerprofil vorrangig so gestaltet ist, dass die Steifigkeit des Wagenkastens erhöht wird. Bodenplatte, Stirnwände und Längsträger werden aus Aluminium-Strangpressprofilen gebildet, wodurch nachteilig wiederum die Korrosionsanfälligkeit erhöht wird.

Aus der DE 10 2009 045 202 A1 ist ein modularer Wagenkasten in Leichtbauweise bekannt, der ebenfalls insbesondere für den Einsatz in Hochgeschwindigkeits-Schienenfahrzeugen konzipiert ist.

Dazu weist der Wagenkasten für ein Personen-Schienenfahrzeug mehrere, in Umfangsrichtung um eine Längsachse geschlossene, Wagenkastenmodule auf, wobei benachbarte Wagenkastenmodule über in Umfangsrichtung geschlossene, ringartige Kopplungsmodule miteinander verbunden sind.

Dieses Konstruktionsprinzip wird seit vielen Jahren auch bei der Rumpffertigung von Flugzeugen, insbesondere für den Passagierverkehr, verwendet. Auf Grund der hohen Fertigungsgenauigkeit werden für die Vorfertigung und die nachfolgende Montage der Wagenkastenmodule aufwendige Vorrichtungen benötigt. Bereits geringe Passungenauigkeiten führen dazu, dass in der Verbindungszone zweier aneinandergrenzender Wagenkastenmodule sich Absätze bilden können, die durch aufwändige Nacharbeiten (Verfüllen, Spachteln, Schleifen) egalisiert werden müssen. Zudem führen derartige Absätze an der Außenhaut des Wagenkastens speziell bei Hochgeschwindigkeitsfahrzeugen, die erfindungsgemäß Spitzengeschwindigkeiten von über 400 km/h erreichen, zu aerodynamischen Turbulenzen und zu einer verstärkten Geräuschentwicklung.

Um die Gesamtmasse des Wagenkastens zu reduzieren, weist der modular aufgebaute, funktionsintegrierte Wagenkasten einen hohen Anteil an Faserkunststoffverbundwerkstoffen (F KV-Werkstoffen) und Hybridwerkstoffen auf.

Wegen der im Bereich des Wagenkastens anzunehmenden mehrachsigen Belastungssituation werden speziell die Kopplungsmodule als Metall- oder FKV-Hybridstruktur gefertigt.

Die EP 0 489 294 A1 beschreibt einen Wagenkasten für Schienenfahrzeuge, basierend auf FKV-Werkstoffen. Hier sind Gruppen von Bauteilen in FKV-Bauweise, die mittels der umlaufenden Ringspanten gefügt werden, zu nennen. Gleichzeitig verlaufen entlang der Wagenkastenlängsachse obere und untere Träger aus FKV. Der Boden ist als U-förmige Schale ausgelegt. Angaben, wie eine Nutzlasterhöhung durch eine Bauweise in FKV erzielt werden kann, sind der Druckschrift nicht zu entnehmen.

In der EP 0 577 940 A1 ist ein Wickelverfahren zur Herstellung von Großkomponenten in FKV- Bauweise offenbart. Es wird der Herstellungsprozess eines Wagenkasteninneren mit angeformten Komponenten zwischen den beiden Schalen aus FKV dargestellt. Der Aufbau und die Gestaltungsweise des Wagenkasteninneren sind nicht geeignet, um die Lastfälle, die sich aus dem Betrieb des Wagenkastens ergeben, zu ertragen. Aus diesem Grund muss das Wagenkasteninnere zwingend mit einem Wagenkastenäußeren verbunden werden, das so ausgelegt ist, dass es den typischen Betriebslastfällen standhält.

Die EP 1 138 567 A2 zeigt einen modular aufgebauten Wagenkasten eines Schienenfahrzeuges in Faserverbundbauweise, der eine Dachplatte, einen Obergurt, Fenstersäulen, Türpfosten, Seitenwandträger, eine Bodenplatte und Treppenmodule umfasst. Diese Module haben vereinheitlichte Schnittstellen. Verschiedene Varianten des Wagenkastens sind durch entsprechende Kombinationen der standardisierten Module herstellbar.

EP 0 836 976 A1 zeigt ein Schienenfahrzeug, das einen Wagenkasten aufweist, der von einem Modul begrenzt wird, das aus selbsttragenden Bauteilen besteht. Der Boden, das Dach und die Seitenflächen des Mittelteils des Wagenkastens des Schienenfahrzeugs werden von dem Modul begrenzt, das einen D-förmigen Querschnitt aufweist. Die Begrenzungswände des Mittelteils haben eine Schichtenstruktur. Sie haben äußere und innere Begrenzungsflächen, die in einem definierten Abstand voneinander angeordnet sind. Die Wände sind aus einem Faserverbundwerkstoff gefertigt. Zwischen den äußeren und inneren Begrenzungsflächen ist eine Füllung aus Kunststoffschaum, Waben aus Kunststoff, Metall oder Papier angeordnet. Diese Füllung ist in stark beanspruchten Verbindungsbereichen durch zusätzliche Einlagen aus Metall verstärkt.

Aufgabe der vorliegenden Erfindung ist es, einen Wagenkasten für ein Schienenfahrzeug zur Personenbeförderung, insbesondere für den Einsatz im Kurzstreckenbetrieb, wie U- und S- Bahnen, so weiterzubilden, dass die Nutzlast des Schienenfahrzeugs bei gleichbleibender Gesamtmasse gegenüber den bekannten Lösungen aus dem Stand der Technik erhöht wird, d. h. dass die Strukturmasse des Wagenkastens reduziert wird.

Zudem soll die Konstruktion möglichst wenig anfällig gegenüber Korrosion sein, um eine lange normative Nutzungsdauer eines derartigen Schienenfahrzeuges zu ermöglichen. Ebenso soll der Wagenkasten wartungsarm ausgebildet sein.

Erfindungsgemäß wird die Aufgabe durch einen Wagenkasten gemäß dem unabhängigen Anspruch 1 gelöst. Vorteilhafte Ausgestaltungen der Erfindung sind in den abhängigen Ansprüchen angegeben.

Der erfindungsgemäße Wagenkasten wird zumindest teilweise aus faserverstärkten Kunststoffverbundwerkstoffen, besonders bevorzugt Kohlenstofffaserverbund-Werkstoffen, ausgebildet, um die Strukturmasse gegenüber einem Wagenkasten nach dem Stand der Technik weiter zu reduzieren. Bevorzugt beträgt der Masseanteil faserverstärkter Kunststoffe im erfindungsgemäßen Wagenkasten bis zu 85 %, besonders bevorzugt mehr als 66 %. Bevorzugt umfasst der faserverstärkte Kunststoff wahlweise thermoplastische oder duroplastische Kunststoffe, besonders bevorzugt Epoxidharze, ungesättigte Polyesterharze, PU-Harze, Vinylesterharze oder Phenolharze, als Matrixwerkstoff.

Vorteilhaft ergibt sich durch die zumindest teilweise Fertigung des Wagenkastens aus faserverstärkten Kunststoffen eine günstige Reduzierung der Strukturmasse des Wagenkastens, wodurch die Nutzlast im Fahrbetrieb erhöht werden kann.

Vorteilhaft wird dadurch bei gleichbleibender Stabilität das Gewicht des Wagenkastens erheblich reduziert, wodurch wiederum eine Erhöhung der Nutzlast des Schienenfahrzeuges ermöglicht wird. Insbesondere bei U-Bahnen können aufgrund der vorgegebenen Zuglängen und Taktzeiten in der gleichen Zeit deutlich mehr Personen befördert werden.

Vorteilhaft ergibt sich weiterhin sowohl ein deutlich reduzierter Wartungsaufwand als auch eine deutlich verringerte Korrosionsanfälligkeit durch die Verwendung von FKV-Werkstoffen. Vorteilhaft ermöglicht die segmentweise Fertigung jeweils gleichartiger Boden-, Dach- und Seitenwandsegmente den Einsatz gängiger Fertigungsverfahren und -werkzeuge für faserverstärkte Kunststoffe und damit verbunden die flexible Anpassung z. B. der Länge eines erfindungsgemäßen Wagenkastens. Weiterhin ist der Wagenkasten druckdicht ausgestaltet.

Der erfindungsgemäße Wagenkasten umfasst zumindest die Baugruppen Seitenwand, Dach, Boden, Stirnwand und jeweils zwei in Längsrichtung über die gesamte Länge des Wagenkastens durchgehend verlaufende untere und obere Längsträger sowie optional ein Kopfmodul. Die Baugruppe Seitenwand des erfindungsgemäßen Wagenkastens umfasst die Bauteile Türsäulen sowie die Seitenwandsegmente und die unteren und oberen Längsträger. Die Baugruppe Dach des erfindungsgemäßen Wagenkastens umfasst die Bauteile Dachsegmente. Die Baugruppe Boden des erfindungsgemäßen Wagenkastens umfasst die Bauteile Bodensegmente und Endtraverse.

Besonders bevorzugt sind die Seitenwand-, Dach- und Bodensegmente der einzelnen Baugruppen platten-, schalen- oder halbschalenförmig ausgestaltet. Die platten-, schalen- oder halbschalenförmigen Dach- bzw. Bodensegmente sind kraft- und / oder form- und / oder stoffschlüssig mit den oberen bzw. den unteren Längsträgern verbunden. Die platten-, schalen- oder halbschalenförmigen Seitenwandsegmente sind kraft- und / oder form- und / oder stoffschlüssig mit den vertikal angeordneten Türsäulen sowie den oberen und unteren Längsträgern verbunden. Die Stirnwand ist platten-, schalen- oder halbschalenförmig ausgeführt.

### Baugruppe Dach:

Bevorzugt ist das Dach als strukturelles Flachdach ausgebildet und umfasst einzelne Dachsegmente, die je nach Funktionalität unterschiedlich ausgebildet sein können. Bevorzugt sind die Dachsegmente plattenförmig ausgebildet. Bevorzugt sind die Dachsegmente im Wesentlichen rechteckig ausgebildet, wobei ihre Längsseiten jeweils senkrecht zur Wagenkastenlängsachse angeordnet sind. Vorzugsweise sind mindestens 7 Dachsegmente in der Baugruppe Dach verbaut.

### Dachsegmente

Die Dachsegmente der Baugruppe Dach sind als Standardtyp-Dachsegmente, Heizung-Lüftung-Klimatechniktyp-Dachsegmente oder Endtyp-Dachsegmente ausgebildet. Bevorzugt beinhaltet die Baugruppe Dach jeweils mindestens ein Standardtyp-Dachsegment, mindestens ein Heizung-Lüftung-Klimatechniktyp-Dachsegment und mindestens ein Endtyp-Dachsegment.

Bevorzugt weist das Heizung-Lüftung-Klimatechniktyp-Dachsegment mindestens eine Aussparung für ein Klimaanlagenaggregat auf. Bevorzugt ist ein Klimaanlagenaggregat auf bis zu 8 Montageelementen, die mit den oberen Längsträgern verbunden sind, montiert und mit den Aussparungen im Heizung-Lüftung-Klimatechniktyp-Dachsegment verbunden. Bevorzugt sind die Montageelemente für das Klimaanlagenaggregat aus einem FKV-Werkstoff ausgebildet.

Bevorzugt sind mindestens ein Standardtyp-Dachsegment und mindestens ein Heizung-Lüftung-Klimatechniktyp-Dachsegment jeweils abwechselnd angeordnet. Alternativ folgen mindestens zwei Standardtyp-Dachsegmente aufeinander. In einer weiteren alternativen Ausführungsform folgen mindestens zwei Heizung-Lüftung-Klimatechniktyp-Dachsegmente aufeinander. In einer weiteren alternativen Ausführungsform gibt es mehr Standardtyp- als Heizung-Lüftung-Klimatechniktyp-Dachsegmente. In einer weiteren alternativen Ausführungsform gibt es mehr Heizung-Lüftung-Klimatechniktyp-Dachsegmente als Standardtyp-Dachsegmente.

Bevorzugt umfasst die Baugruppe Dach zwei Endtyp-Dachsegmente. Die Endtyp-Dachsegmente stellen dabei die vorderen und hinteren Enden und somit den Abschluss des Daches in Wagenlängsrichtung dar.

Bevorzugt werden die Dachsegmente aus FKV-Werkstoffen ausgebildet.

Bevorzugt umfassen die Dachsegmente mindestens eine Außen- und eine Innenwand.

Im Sinne der Erfindung wird unter der Außenwand jene Fläche verstanden, welche den Wagenkasten nach außen abschließt und welche in Verbindung mit der Umgebung außerhalb des Wagenkastens steht. Im Sinne der Erfindung wird unter der Innenwand jene Fläche verstanden, welche in Kontakt mit dem Wagenkasteninnenraum und somit dem Fahrgastraum steht.

Bevorzugt sind die Innen- und die Außenwand der Dachsegmente parallel zueinander und jeweils ein- oder mehrlagig aus mindestens einem FKV-Werkstoff ausgebildet.

Bevorzugt sind die Innen- und die Außenwand mit mehrachsiger Faserausrichtung, besonders bevorzugt bidirektionaler Faserausrichtung, ganz besonders bevorzugt in 0/90°-Orientierung, gefertigt.

Bevorzugt werden die Fasern in den faserverstärkten Kunststoffverbund der Dachsegmente als Roving und / oder Vlies und / oder Gewebe und / oder Gelege und / oder Geflecht eingebracht.

Bevorzugt sind zwischen der Innen- und der Außenwand der Dachsegmente Verstärkungselemente angeordnet, wobei diese als rechteckige Hohlprofile ausgeführt sind.

Bevorzugt sind die Kanten der rechteckigen Hohlprofile parallel zu den Kanten der Dachsegmente angeordnet.

Bevorzugt werden die rechteckigen Hohlprofile ein- oder mehrlagig aus mindestens einem FKV-Werkstoff hergestellt.

Bevorzugt sind die rechteckigen Hohlprofile mit mehrachsiger Faserausrichtung, besonders bevorzugt bidirektionaler Faserausrichtung, gefertigt.

Bevorzugt weisen die rechteckigen Hohlprofile zusätzlich eine Kernfüllung auf, ausgebildet als Schaum- und / oder Waben- und / oder Holzkern. Bevorzugt handelt es sich bei dem Holzkern um Balsaholz. Weiterhin kann die Kernfüllung auch aus Kork oder als faseriges Dämmmaterial ausgebildet sein. Bevorzugt dient die Kernfüllung zur Übertragung von Gewichts- und Schubkräften.

Besonders bevorzugt sind die rechteckigen Hohlprofile mit einem Hartschaumstoff gefüllt.

Bevorzugt ist zwischen den rechteckigen Hohlprofilen ein flächiger Kernwerkstoff, ausgebildet als Schaum- und / oder Waben- und / oder Holzkern, zwischen der Innen- und der Außenwand des Dachsegmentes angeordnet, um die strukturelle Festigkeit und damit die Begehbarkeit zu gewährleisten.

Bevorzugt ist der Kernwerkstoff eines Dachsegmentes als Hartschaumstoffplatte ausgebildet.

Bevorzugt erfolgt die Herstellung der einzelnen Dachsegmente in einem Pressverfahren, wobei das Fügen der rechteckigen Hohlprofile und optional der flächigen Kernwerkstoffe mit der Innen- oder der Außenwand des Dachsegmentes zusätzlich durch Kleben erfolgt.

Bevorzugt weisen die Innen- und die Außenwand eines Dachsegmentes jeweils zumindest an einer ihrer Seiten, die senkrecht zur Wagenkastenlängsachse ausgerichtet ist, im Folgenden als Längsseite bezeichnet, einen Bereich auf, in dem sie die rechteckigen Hohlprofile dergestalt überragen, dass eine formschlüssige Verbindung zwischen benachbarten Dachsegmenten hergestellt werden kann. Vorteilhaft erlaubt diese bevorzugte Ausführungsform das Fügen einzelner Dachsegmente zur Baugruppe Dach in Analogie zu aus dem Stand der Technik für Bodenbeläge wie Parkett oder Laminat bekannten Verfahren (Klick-Parkett bzw. Klick-Laminat). Besonders bevorzugt überragt an einer der beiden Längsseiten eines einzelnen Dachsegmentes ein Bereich der Innenwand im Wesentlichen über die gesamte Längenausdehnung der Längsseite die rechteckigen Hohlprofile, und an der dieser Längsseite gegenüberliegenden Längsseite überragt ein Bereich der Außenwand die rechteckigen Hohlprofile im Wesentlichen über die gesamte Längenausdehnung der Längsseite. Des Weiteren besonders bevorzugt erfolgt das Fügen der einzelnen Dachsegmente zur Baugruppe Dach beginnend mit den an den beiden Endbereichen eines Wagenkastens angeordneten Dachsegmenten. An diesen Dachsegmenten wird jeweils ein nächstes Dachsegment so angeordnet, dass der die rechteckigen Hohlprofile überragende Bereich der Außenwand des mit einem Endbereich des Wagenkastens verbundenen Dachsegments die Außenwand des nächsten Dachsegmentes zumindest mittelbar über eine Schicht eines Klebstoffs berührt. Desgleichen berührt der die rechteckigen Hohlprofile überragende Bereich der Innenwand des nächsten Dachsegmentes die Innenwand des mit einem Endbereich des Wagenkastens verbundenen Dachsegmentes zumindest mittelbar über eine Schicht eines Klebstoffs. Mit anderen Worten erfolgt das Fügen der einzelnen Dachsegmente von außen, also den Endbereichen des Wagenkastens, beginnend nach innen, also zur Mitte des Wagenkastens, hin. Das Dachsegment, das in der Mitte der Baugruppe Dach angeordnet ist, ist dementsprechend so gestaltet, dass seine Außenwand keinen die rechteckigen Hohlprofile überragenden Bereich aufweist, und seine Innenwand die rechteckigen Hohlprofile an beiden Längsseiten dieses Dachsegmentes überragt. Des Weiteren besonders bevorzugt sind benachbarte rechteckige Hohlprofile benachbarter Dachsegmente stoffschlüssig, insbesondere mittels eines Klebstoffs, miteinander verbunden, wodurch sich vorteilhaft neben einer verbesserten Stabilität der Verbindung auch eine Möglichkeit zum Ausgleich von Fertigungstoleranzen ergibt.

Bevorzugt enthält die Baugruppe Dach aus Gründen der Aerodynamik und Optik eine Dachverkleidung, die besonders bevorzugt aus mehreren Einzelelementen ausgebildet ist und ebenfalls als faserverstärkter Kunststoffverbund ausgeführt ist.

### Baugruppe Boden:

Der Boden des Wagenkastens bildet die Schnittstelle zwischen den Passagieren und dem Wagenkasten.

Bevorzugt umfasst die Baugruppe Boden einzelne Bodensegmente, die den strukturellen Boden des Wagenkastens bilden, und mindestens eine Endtraverse. Bevorzugt sind die Bodensegmente plattenförmig ausgebildet, und überbrücken den Raum zwischen den beiden unteren Längsträgern. Bevorzugt sind mindestens 15 Bodensegmente in der Baugruppe Boden verbaut. Bevorzugt umfasst die Baugruppe Boden zwei Endtraversen, die den Abschluss des Wagenkastens bilden und eine Schnittstelle zur Einleitung der Längskräfte in die Längsträger darstellen.

### Bodensegmente

Die Bodensegmente der Baugruppe Boden sind als Zentraltyp-Bodensegmente, Standardtyp-Bodensegmente oder Endtyp-Bodensegmente ausgebildet. Bevorzugt beinhaltet die Baugruppe Boden jeweils ein Zentraltyp-Bodensegment, mindestens zwei Standardtyp-Bodensegment und zwei Endtyp-Bodensegmente.

Bevorzugt ist ein Zentraltyp-Bodensegment in der Mitte des Bodens des Wagenlastens und davon ausgehend zu beiden Seiten jeweils mindestens ein Standardtyp-Bodensegment angeordnet. Bevorzugt gibt es mehr Standard- als Zentraltyp-Bodensegmente. Bevorzugt gibt es mehr als mindestens zwei Standardtyp-Bodensegmente. Bevorzugt folgen mindestens zwei Standardtyp-Bodensegmente aufeinander.

Bevorzugt umfasst die Baugruppe Boden zwei Endtyp-Bodensegmente. Die Endtyp-Bodensegmente stellen dabei die jeweiligen Enden und somit den Abschluss des Bodens dar.

Bevorzugt werden die Bodenseomente aus mindestens einem FKV-Werkstoff ausgebildet.

Bevorzugt umfassen die Bodensegmente mindestens eine Außen- und eine Innenwand.

Bevorzugt sind die Innen- und die Außenwand der Bodensegmente parallel zueinander und jeweils ein- oder mehrlagig aus mindestens einem FKV-Werkstoff ausgebildet.

Bevorzugt sind die Innen- und die Außenwand mit mehrachsiger Faserausrichtung, besonders bevorzugt bidirektionaler Faserausrichtung, ganz besonders bevorzugt in 0/90°-Orientierung, gefertigt.

Bevorzugt werden die Fasern in den faserverstärkten Kunststoffverbund der Bodensegmente als Roving und / oder Vlies und / oder Gewebe und / oder Gelege und / oder Geflecht eingebracht.

Bevorzugt sind zwischen der Innen- und der Außenwand der Bodensegmente Verstärkungselemente angeordnet, wobei diese als rechteckige Hohlprofile, vorzugsweise unterschiedlicher Größen, ausgeführt sind.

Bevorzugt sind die rechteckigen Hohlprofile mit ihren Längsachsen quer zur Wagenkastenlängsachse ohne Abstand aneinander gereiht zwischen der Innen- und der Außenwand der Bodensegmente angeordnet.

Bevorzugt sind nur rechteckige Hohlprofile gleicher Größe als Verstärkungselemente zwischen der Innen- und der Außenwand der Bodensegmente angeordnet und bilden das Standardtyp-Bodensegment.

Bevorzugt sind rechteckige Hohlprofile unterschiedlicher Größe als Verstärkungselemente zwischen der Innen- und der Außenwand der Bodensegmente angeordnet und bilden das Zentraltyp-Bodensegment bzw. das Endtyp-Bodensegment.

Bevorzugt werden die rechteckigen Hohlprofile ein- oder mehrlagig aus mindestens einem FKV-Werkstoff hergestellt.

Bevorzugt sind die rechteckigen Hohlprofile mit mehrachsiger Faserausrichtung, besonders bevorzugt bidirektionaler Faserausrichtung gefertigt.

Bevorzugt weisen die rechteckigen Hohlprofile zusätzlich eine Kernfüllung auf, ausgebildet als Schaum- und / oder Waben- und / oder Holzkern. Vorteilhaft ergibt sich damit eine verbesserte Stabilität und die akustische und thermische Isolation des Fahrgastinnenraums.

Bevorzugt sind die rechteckigen Hohlprofile mit einem Hartschaumstoff gefüllt.

Bevorzugt erfolgt die Herstellung der einzelnen Bodensegmente in einem Pressverfahren, wobei das Fügen der rechteckigen Hohlprofile mit entweder der Innen- oder der Außenwand des Bodensegmentes durch Kleben erfolgt.

Bevorzugt weisen die Innen- und die Außenwand eines Bodensegmentes jeweils zumindest an einer ihrer Seiten, die senkrecht zur Wagenkastenlängsachse ausgerichtet ist, im Folgenden als Längsseite bezeichnet, einen Bereich auf, in dem sie die rechteckigen Hohlprofile dergestalt überragen, dass eine formschlüssige Verbindung zwischen benachbarten Bodensegmenten hergestellt werden kann. Vorteilhaft erlaubt diese bevorzugte Ausführungsform das Fügen einzelner Bodensegmente zur Baugruppe Boden in Analogie zu aus dem Stand der Technik für Bodenbeläge wie Parkett oder Laminat bekannten Verfahren (Klick-Parkett bzw. Klick-Laminat). Besonders bevorzugt überragt an einer der beiden Längsseiten eines einzelnen Bodensegmentes ein Bereich der Innenwand im Wesentlichen über die gesamte Längenausdehnung der Längsseite die rechteckigen Hohlprofile, und an der dieser Längsseite gegenüberliegenden Längsseite überragt ein Bereich der Außenwand die rechteckigen Hohlprofile im Wesentlichen über die gesamte Längenausdehnung der Längsseite. Des Weiteren besonders bevorzugt erfolgt das Fügen der einzelnen Bodensegmente zur Baugruppe Boden beginnend mit den an den beiden Endbereichen eines Wagenkastens angeordneten Bodensegmenten. An diesen Bodensegmenten wird jeweils ein nächstes Bodensegment so angeordnet, dass der die rechteckigen Hohlprofile überragende Bereich der Außenwand des mit einem Endbereich des Wagenkastens verbundenen Bodensegments die Außenwand des nächsten Bodensegmentes zumindest mittelbar über eine Schicht eines Klebstoffs berührt. Desgleichen berührt der die rechteckigen Hohlprofile überragende Bereich der Innenwand des nächsten Bodensegmentes die Innenwand des mit einem Endbereich des Wagenkastens verbundenen Bodensegmentes zumindest mittelbar über eine Schicht eines Klebstoffs. Mit anderen Worten erfolgt das Fügen der einzelnen Bodensegmente von außen, also den Endbereichen des Wagenkastens, beginnend nach innen, also zur Mitte des Wagenkastens, hin. Das Bodensegment, das in der Mitte der Baugruppe Boden angeordnet ist, ist dementsprechend so gestaltet, dass seine Außenwand keinen die rechteckigen Hohlprofile überragenden Bereich aufweist, und seine Innenwand de rechteckigen Hohlprofile an beiden Längsseiten dieses Bodensegmentes überragt. Des Weiteren besonders bevorzugt sind benachbarte rechteckige Hohlprofile benachbarter Bodensegmente stoffschlüssig, insbesondere mittels eines Klebstoffs, miteinander verbunden, wodurch sich vorteilhaft neben einer verbesserten Stabilität der Verbindung auch eine Möglichkeit zum Ausgleich von Fertigungstoleranzen ergibt.

Bevorzugt kann die Baugruppe Boden zusätzlich eine aus Segmenten bestehende Bodenverkleidung enthalten.

### Endtraverse

Bevorzugt bilden die Endtraversen der Baugruppe Boden den Abschluss des Wagenkastens auf beiden Seiten, verbindet die Seitenwände über die unteren Längsträger miteinander und dient unter anderem zur Durchführung der Kupplungskräfte, die in die unteren Längsträger des Wagenkastens eingeleitet werden. Bevorzugt nimmt die Endtraverse zumindest einen Teil der Längslasten auf. Bevorzugt nimmt die Endtraverse zumindest einen Teil der auf die Endtyp-Bodensegmente wirkenden Lasten auf. Bevorzugt werden Systeminstallationen, wie beispielsweise Leitungen und Kabel, durch die Endtraverse geführt.

Bevorzugt ist die Endtraverse als rechteckiges Hohlprofil ausgebildet.

Bevorzugt bestehen die Endtraversen aus gewickelten Kastenprofilen, welche in einem nachgelagerten Prozessschritt durch spanende Bearbeitung auf die jeweiligen geometrischen Anforderungen angepasst werden, beispielsweise durch Fräsen. Bevorzugt werden Aussparungen in die Endtraverse für das Fügen mit den Verbindungselementen zur Einleitung der Kupplungskräfte in die unteren Längsträger in einem nachgelagerten Prozessschritt durch spannende Fertigungsverfahren, beispielsweise durch Fräsen, eingebracht.

Bevorzugt ist die Endtraverse aus mindestens einem FKV-Werkstoff ausgebildet.

Bevorzugt sind die Fasern des FKV-Werkstoffes mehrachsig ausgerichtet, besonders bevorzugt bidirektional.

Bevorzugt werden die Fasern in den faserverstärkten Kunststoffverbund der Endtraverse als Roving, Vlies, Gewebe, Gelege und / oder Geflecht eingebracht.

### Baugruppe Seitenwand:

Bevorzugt umfasst die Baugruppe Seitenwand des erfindungsgemäßen Wagenkastens einen oberen und einen unteren Längsträger, die Seitenwandsegmente und die Türsäulen. Die oberen und unteren Längsträger bilden mit den vertikal zur Wagenkastenlängsachse verlaufenden Türsäulen das lasttragende Skelett und strukturelle Rückgrat des Wagenkastens.

### Längsträger:

Der erfindungsgemäße Wagenkasten weist zwei obere und zwei untere Längsträger auf, wobei die oberen und unteren Längsträger jeweils über die gesamte Länge des Wagenkastens angeordnet sind. Bevorzugt schließen die oberen und unteren Längsträger jeweils mit der Seitenwand ab. Vorteilhaft ist dadurch eine sehr hohe Stabilität gegeben.

Erfindungsgemäß sind die oberen und unteren Längsträger als Mehrkammerhohlprofile aus einem FKV-Werkstoff ausgebildet und tragen zur weiteren Reduktion der Gesamtmasse gegenüber gängigen Stahl- oder Aluminiumprofilen bei.

Weiterhin dienen die Mehrkammerhohlprofile der oberen und unteren Längsträger vorteilhaft der Aufnahme der in den Wagenkasten eingeleiteten Längskräfte.

Bevorzugt sind die oberen und unteren Längsträger mit mindestens zwei Kammern, besonders bevorzugt drei bis fünf Kammern ausgebildet, die durchgehend entlang der Längsachse der Längsträger verlaufen.

Besonders bevorzugt weisen die oberen und unteren Längsträger keine Trenn- oder Fügestellen senkrecht zur Wagenkastenlängsachse auf. Besonders bevorzugt sind die Längsträger als einstückige Bauteile über die gesamte Länge des Wagenkastens angeordnet. Alternativ werden die oberen und unteren Längsträger aus mehreren einzelnen Bereichen, die jeweils entlang der Wagenkastenlängsachse als voneinander unabhängige Abschnitte ausgebildet sind, gebildet, die mit gängigen Fügeverfahren kraft- und / oder form- und / oder stoffschlüssig an ihren Stirnflächen miteinander verbunden sind.

Erfindungsgemäß sind die Kammern der Mehrkammerhohlprofile von einer Außenwand umgeben. Erfindungsgemäß besteht die Außenwand aus einer oder mehreren Lagen mindestens eines FKV-Werkstoffs. Erfindungsgemäß werden die Kammern der Mehrkammerhohlprofile durch Stege voneinander getrennt. Besonders bevorzugt sind die Längsachsen der Stege entlang der Längsachse der Längsträger ausgerichtet.

Bevorzugt sind sowohl die Außenwand des Mehrkammerhohlprofils als auch die Stege zwischen den einzelnen Kammern der Mehrkammerhohlprofile ein- oder mehrlagig ausgebildet.

Bevorzugt weist zumindest ein Bereich, Außenwand und / oder Steg, des Mehrkammerhohlprofils des oberen und unteren Längsträgers eine lokale Verstärkung auf. Bevorzugt wird die lokale Verstärkung durch eine Aufweitung des Zwischenraums zwischen den einzelnen Lagen der Außenwand und / oder Stege erreicht, so dass Füllbereiche entstehen. Bevorzugt sind die Füllbereiche mit Endlos-Fasern, ausgerichtet entlang der Trägerlängsachse, gefüllt. Besonders bevorzugt sind die Füllbereiche mit Ultra-High-Modulus-Fasern (UHM-Fasern) gefüllt. Bevorzugt können zusätzlich Zwischenlagen im Bereich der lokalen Verstärkung des oberen und unteren Längsträgers eingebracht werden.

Besonders bevorzugt sind die Fasern innerhalb der einzelnen Lagen, die die Außenwand des Mehrkammerhohlprofils und die Stege zwischen den einzelnen Kammern der Mehrkammerhohlprofile bilden, unidirektional oder mehrachsig ausgerichtet, besonders bevorzugt mit unidirektionaler oder quadraxialer Ausrichtung.

Bevorzugt ist sowohl der Lagenaufbau der Außenwand des Mehrkammerhohlprofils als auch der Stege zwischen den einzelnen Kammern der Mehrkammerhohlprofile alternierend aus Einzellagen mit unidirektionaler und mehrachsiger, besonders bevorzugt quadraxialer, Faserausrichtung hergestellt, wobei die Einzellagen mit mehrachsiger Faserausrichtung besonders bevorzugt Gewebe umfassen.

Besonders bevorzugt werden die Längsträger mittels des Pultrusionsverfahrens hergestellt.

### Obere Längsträger (Dachträger):

Bevorzugt sind die oberen Längsträger direkt mit den einzelnen Dachsegmenten der Baugruppe Dach verbunden. Die oberen Längsträger stellen die Verbindung zwischen den Dach- und Seitenwandsegmenten her. Die oberen Längsträger werden im Folgenden als Dachträger bezeichnet.

Besonders bevorzugt sind die Dachträger als Mehrkammerhohlprofile mit mindestens zwei Kammern, besonders bevorzugt mit mindestens drei Kammern, vorteilhaft mit fünf Kammern, ausgebildet, die durchgehend entlang der Längsachse der Längsträger verlaufen. Besonders bevorzugt weisen die einzelnen Kammern der Dachträger vieleckige Querschnitte auf. Besonders bevorzugt ist mindestens eine der Kammern des Mehrkammerhohlprofils im Querschnitt als rechtwinkliges Trapez und mindestens eine weitere Kammer als rechtwinkliges Polygon ausgebildet. Besonders bevorzugt weist der Querschnitt der Kammer abgerundete Ecken auf. Alternativ weist der Querschnitt einer Kammer Ecken auf. Die Abrundung der Ecken entspricht dabei dem zulässigen Biegeradius der Verstärkungsfasern. Durch die Abrundung wird somit vorteilhaft ein Faserbruch vermieden. Die Aneinanderreihung der einzelnen Kammern ergibt das Profil der Dachträger.

Bevorzugt sind die, durch die Abrundung der Ecken der einzelnen Kammern, entstehenden Hohlräume, im Folgenden als Füllzwickel bezeichnet, zusätzlich mit Endlos-Fasern, ausgerichtet entlang der Trägerlängsachse, gefüllt. Besonders bevorzugt sind die Füllzwickel mit Ultra-High-Modulus-Fasern (UHM-Fasern) gefüllt.

Bevorzugt weist ein Dachträger mindestens eine Kammer auf, die frei von Verbindungselementen wie Bolzen oder Nieten ist und vorteilhaft zur Aufnahme von peripheren Systeminstallationen, z. B. elektrischen Zuleitungen, ausgebildet sein kann.

Bevorzugt erfahren die für das Fügen mit den Seiten- oder Dachsegmenten vorgesehenen Flächen der Dachträger eine dem Fügeprozess vorausgehende und auf den Fügeprozess abgestimmte Oberflächenbearbeitung.

### Untere Längsträger (Bodenträger):

Bevorzugt sind die unteren Längsträger direkt mit den einzelnen Bodensegmenten der Baugruppe Boden verbunden. Die unteren Längsträger stellen die Verbindung zwischen den Boden- und Seitenwandsegmenten her. Die unteren Längsträger werden im Folgenden als Bodenträger bezeichnet.

Bevorzugt sind die Bodenträger als Mehrkammerhohlprofile mit optional über die Länge variierendem Querschnitt mit mindestens zwei Kammern, besonders bevorzugt mit drei Kammern, ausgebildet, die durchgehend entlang der Längsachse der Längsträger verlaufen. Besonders bevorzugt weist das Mehrkammerhohlprofil eines unteren Längsträgers zumindest in einem Bereich des Wagenkastens zwei Kammern auf. Besonders bevorzugt ist mindestens eine der Kammern des Mehrkammerhohlprofils der Bodenträger im Querschnitt als rechtwinkliges Polygon ausgebildet. Besonders bevorzugt weisen die einzelnen Kammern der Bodenträger vieleckige Querschnitte, besonders bevorzugt dreieckige und/ oder viereckige Querschnitte auf. Besonders bevorzugt weist der Querschnitt der Kammer abgerundete Ecken auf. Die Abrundung der Ecken entspricht dabei dem zulässigen Biegeradius der Verstärkungsfasern. Alternativ weist der Querschnitt einer Kammer Ecken auf. Die Aneinanderreihung der einzelnen Kammern ergibt das Profil der Bodenträger.

Bevorzugt sind die, durch die Abrundung der Ecken der einzelnen Kammern, entstehenden Hohlräume, im Folgenden als Füllzwickel bezeichnet, zusätzlich mit Endlos-Fasern, ausgerichtet entlang der Trägerlängsachse, gefüllt. Besonders bevorzugt sind die Füllzwickel mit Ultra-High-Modulus-Fasern (UHM-Fasern) gefüllt.

Bevorzugt weist ein Bodenträger in mindestens einem Teilbereich des Wagenkastens eine geringere Anzahl von Kammern auf, als in einem anderen Teilbereich des Wagenkastens, wobei die durch Reduzierung der Kammeranzahl erzeugten Aussparungen dem Fügen mit den Verstärkungselementen zur Auflage auf dem Drehgestell dienen.

Bevorzugt wird die Reduzierung der Kammeranzahl der Bodenträger in einem nachgelagerten Prozessschritt durch spannende Fertigungsverfahren, z. B. Fräsen, erzielt.

Bevorzugt resultiert die Variation des Querschnitts der Bodenträger aus einer Aneinanderreihung von Mehrkammerhohlprofilen mit unterschiedlicher Kammeranzahl entlang der Wagenkastenlängsachse.

Bevorzugt erfahren die für das Fügen mit Seiten- oder Bodensegmenten vorgesehenen Flächen der Bodenträger eine dem Fügeprozess vorausgehende und auf den Fügeprozess abgestimmte Oberflächenbearbeitung.

### Verbinden der Dach- und Bodenträger mit den Baugruppen des Wagenkastens:

Bevorzugt werden die Dachträger sowie die Bodenträger mit den Seitenwandsegmenten und den Türsäulen zur Baugruppe Seitenwand verbunden. In einer weiteren Ausführung erfolgt danach das Fügen mit den einzelnen Segmenten der Baugruppe Dach und Boden sowie den Baugruppen Stirnwand und / oder Kopfmodul. Bevorzugt erfolgt das Verbinden mit mindestens einer der folgenden Komponenten der Baugruppe Seitenwand und Dach: Seitenwandsegmente, Türsäulen, Dachsegmente. Weiterhin erfolgt das Verbinden der Dachträger sowie der Bodenträger nur teilweise mit den Seitenwandsegmenten, da diese im Bereich der Türsäulen nicht durchgängig sind.

Bevorzugt sind die unteren Längsträger der beiden Seitenwände in Wagenkastenlängsrichtung mit dem Boden mittels Verbindungselementen verbunden.

Bevorzugt sind die oberen Längsträger der beiden Seitenwände in Wagenkastenlängsrichtung mit dem Dach mittels Verbindungselementen verbunden.

Weiterhin bevorzugt sind die oberen Längsträgermit den Dach- und Seitenwand-Segmenten und den Türsäulen mittels Verbindungselementen verbunden. Zu den Verbindungselementen zählen Nieten, Schrauben oder Klebstoffe oder einer Kombination aus diesen. Bevorzugt besteht zumindest ein Teil der Verbindungselemente aus Metall.

Bevorzugt wird ein Kopfmodul bzw. eine Fahrerkabine durch Verschraubung mit den Dachträgern verbunden. Bevorzugt werden die Endtraversen durch Verschraubung mit den Bodenträgern verbunden.

Bevorzugt erfolgt das Verbinden mit mindestens einer der folgenden Komponenten der Baugruppe Boden und Seitenwand: Endtraverse, Seitenwandsegment, Türsäulen.

### Seitenwandsegmente:

Bevorzugt sind die Seitenwandsegmente der Baugruppe Seitenwand als platten-, schalen- oder halbschalenförmige Segmente ausgebildet. Die Seitenwandsegmente sind als Übergangstyp-Seitenwandsegment oder Fenstertyp-Seitenwandsegment ausgebildet. Unter einem Übergangstyp-Seitenwandsegment wird im Sinne der Erfindung ein Seitenwandsegment verstanden, das an den Enden des Wagenkastens angeordnet ist und keine Aussparung aufweist. Unter einem Fenstertyp-Seitenwandsegment wird im Sinne der Erfindung ein Seitenwandsegment verstanden, das nicht an den Enden des Wagenkastens angeordnet ist und eine Aussparung aufweist. Bevorzugt weist das Fenstertyp-Seitenwandsegment eine Aussparung auf, in welche ein Fenster einsetzbar ist.

Bevorzugt beinhaltet die Baugruppe Seitenwand jeweils mindestens ein Übergangstyp-Seitenwandsegment und mindestens ein Fenstertyp-Seitenwandsegment.

Bevorzugt sind mindestens ein Übergangstyp-Seitenwandsegment und mindestens ein Fenstertyp-Seitenwandsegment jeweils abwechselnd angeordnet. Alternativ folgen mindestens zwei Fenstertyp-Seitenwandsegmente aufeinander. In einer weiteren alternativen Ausführungsform folgen mindestens zwei Übergangstyp-Seitenwandsegmente aufeinander. In einer weiteren alternativen Ausführungsform gibt es mehr Übergangstyp- als Fenstertyp-Seitenwandsegmente. In einer weiteren alternativen Ausführungsform gibt es mehr Fenstertyp- als Übergangstyp-Seitenwandsegmente.

Bevorzugt werden die Seitenwandsegmente aus mindestens einem FKV-Werkstoff ausgebildet.

Bevorzugt umfassen die Seitenwandsegmente mindestens eine Außen- und eine Innenwand.

Bevorzugt sind die Innenwand und die Außenwand des Seitenwandsegmentes in einem Abstand parallel zueinander angeordnet und jeweils ein- oder mehrlagig aus einem FKV-Werkstoff ausgebildet.

Bevorzugt verlaufen die Innen- und die Außenwand der Seitensegmente im Wesentlichen über die gesamte Höhe des Seitenwandsegmentes parallel zueinander, wobei sich durch Abwinkelung der Abstand zwischen der Innen- und Außenwand zur Ober- und / oder Unterkante des Seitenwandsegmentes hin verringert.

Bevorzugt sind die Innen- und die Außenwand mit mehrachsiger Faserausrichtung, besonders bevorzugt bidirektionaler Faserausrichtung, gefertigt.

Bevorzugt werden die Fasern in den faserverstärkten Kunststoffverbund der Seitenwandsegmente als Roving und / oder Vlies und / oder Gewebe und / oder Gelege und / oder Geflecht eingebracht.

Bevorzugt ist zwischen der Innen- und der Außenwand der Seitenwandsegmente eine mittlere Schicht zur Aussteifung des Seitenwandsegmentes, auch Versteifungsschicht genannt, angeordnet.

Bevorzugt verbindet die mittlere Schicht des Seitenwandsegmentes Teilbereiche der Innenwand mit Teilbereichen der Außenwand des Seitenwandsegmentes und ist ein- oder mehrlagig aus einem FKV-Werkstoff ausgebildet.

Bevorzugt ist die mittlere Schicht der Seitenwandsegmente zumindest bereichsweise parallel zur Innen- und Außenwand des Seitenwandsegmentes ausgerichtet.

Bevorzugt verläuft die mittlere Schicht senkrecht zur Seitenwandlängsrichtung alternierend zwischen der Innen- und Außenwand des Seitenwandsegmentes und verbindet diese miteinander. Besonders bevorzugt ist die mittlere Schicht als alternierendes, mäanderförmiges Hutprofil ausgebildet, welches trapezförmig zwischen der Außen- und Innenwand des Seitensegmentes verläuft.

Bevorzugt ist die Versteifungsschicht mit mehrachsiger Faserausrichtung, besonders bevorzugt bidirektionaler Faserausrichtung, gefertigt.

Bevorzugt ist die mittlere Schicht als Schaum- und / oder Waben- und / oder Holzkernschicht ausgebildet und dient zusätzlich der akustischen und thermischen Isolierung des Fahrgastinnenraums. Bevorzugt ist die mittlere Schicht als Hartschaumstoff ausgeführt. Bevorzugt wird der Hartschaumstoffkern in Form mehrerer aneinander gelegter trapezförmiger Streifen ausgeführt, die in und / oder vertikal (von oben nach unten) zur Fahrzeuglängsrichtung zwischen der Innen- und der Außenwand eingebracht werden. Vorteilhaft dient die mittlere Schicht der Schall- und Wärmedämmung des Wagenkasteninnenraums.

Bevorzugt ist die mittlere Schicht als Kombination aus einzelnen trapezförmigen Hartschaumkernen und einer zwischen diesen alternierend verlaufender ein- oder mehrlagiger Schicht aus einem FKV-Werkstoff ausgebildet.

Bevorzugt erfolgt die Herstellung der einzelnen Seitenwandsegmente durch ein Nasslaminat, welches im Ofen unter Vakuum oder im Autoklaven aushärtet, wobei das Fügen der Schaum- und / oder Waben- und / oder Holzkerne mit entweder der Innen- oder der Außenwand des Seitenwandsegmentes zusätzlich durch Kleben erfolgt.

### Türsäulen:

Bevorzugt wird das lasttragende Skelett des erfindungsgemäßen Wagenkastens durch Türsäulen zur Verbindung der Boden- und Dachträger vervollständigt. Bevorzugt verbinden die Türsäulen gemeinsam mit den Seitenwandsegmenten die Dach- und die Bodenträger des erfindungsgemäßen Wagenkastens.

Bevorzugt weisen die Türsäulen ein U- oder C-förmiges Profil oder ein Doppel-C-förmiges Profil auf und sind ein- oder mehrlagig aus einem FKV-Werkstoff ausgebildet.

Bevorzugt sind die Fasern in den Einzellagen mehrachsig ausgerichtet, besonders bevorzugt bidirektional.

Bevorzugt werden die Fasern in den faserverstärkten Kunststoffverbund als Roving und/ oder Vlies und / oder Gewebe und / oder Gelege und / oder Geflecht eingebracht.

Bevorzugt werden Aussparungen in den Türsäulen in einem nachgelagerten Prozessschritt durch spannende Fertigungsverfahren, z. B. Fräsen, erzielt.

Bevorzugt dienen die Aussparungen zur Aufnahme der Steuerungselektronik der automatischen Türen.

Bevorzugt weisen die Türsäulen Schnittstellen zu allen angrenzenden Systembauteilen auf. Hierzu befindet sich an der C-Mittelfläche ein durch Fräsen hergestelltes Bohrbild beliebiger Geometrie.

### Baugruppe Stirnwand:

Bevorzugt schließt die Baugruppe Stirnwand den Wagenkasten ab, wobei jeder Wagenkasten mindestens eine Stirnwand aufweist. Bevorzugt weist die Stirnwand eine Aussparung auf, die den Durchtrittsbereich zu angekoppelten Wagenkästen definiert, so dass die Stirnwand einen an einer Seite offenen U-förmigen Rahmen, welcher besonders bevorzugt nach unten offen ist, bildet.

Bevorzugt weist der erfindungsgemäße Wagenkasten an seinen jeweiligen Enden, welche zur Verbindung mit anderen Wagenkästen vorgesehen sind, die Baugruppe Stirnwand auf. Bevorzugt weist der erfindungsgemäße Wagenkasten, an der Seite, die zur Verbindung mit dem Kopfmodul bzw. der Kabine vorgesehen ist, keine Stirnwand auf.

Bevorzugt wird die Stirnwand aus mindestens einem FKV-Werkstoff ausgebildet.

Bevorzugt umfasst die Stirnwand mindestens eine Außen- und eine Innenwand.

Bevorzugt sind die Innen- und die Außenwand der Stirnwand parallel zueinander und jeweils ein- oder mehrlagig aus faserverstärkten Kunststoff ausgebildet.

Bevorzugt verlaufen die Innen- und die Außenwand der Stirnwand im Wesentlichen über die gesamte Rahmenfläche parallel zueinander, wobei sich durch Abwinkelung der Abstand zwischen der Innen- und Außenwand zur Außenseite des Rahmens hin soweit verringert, dass Innen- und Außenwand in direkten flächigen Kontakt miteinander stehen.

Bevorzugt sind die Innen- und die Außenwand mit mehrachsiger Faserausrichtung, besonders bevorzugt bidirektionaler Faserausrichtung, gefertigt.

Bevorzugt werden die Fasern in den faserverstärkten Kunststoffverbund der Stirnwand als Roving und / oder Vlies und / oder Gewebe und / oder Gelege und / oder Geflecht eingebracht.

Bevorzugt ist zwischen der Innen- und der Außenwand der Stirnwand eine mittlere Schicht zur Aussteifung der Stirnwand, auch Versteifungsschicht genannt, angeordnet.

Bevorzugt ist die mittlere Schicht als Schaum- und / oder Waben- und / oder Holzkern ausgebildet und dient zusätzlich der akustischen und thermischen Isolierung des Fahrgastinnenraums.

Besonders bevorzugt wird der erfindungsgemäße Wagenkasten für die Herstellung eines Schienenfahrzeuges zur Personenbeförderung für den Einsatz im Kurzstreckenbetrieb, wie bei U- und S-Bahnen, bei denen die Schienenfahrzeuge oder die aus ihnen gebildeten Zugeinheiten in kurzen Intervallen beschleunigt und abgebremst werden, verwendet.

Für die Realisierung der Erfindung ist es auch zweckmäßig, die vorbeschriebenen erfindungsgemäßen Ausgestaltungen, Ausführungsformen und Merkmale der Ansprüche in jeder Anordnung miteinander zu kombinieren.

Nachfolgend wird die Erfindung anhand einiger Ausführungsbeispiele erläutert. Die Ausführungsbeispiele sollen dabei die Erfindung beschreiben, ohne diese zu beschränken.

Anhand von Zeichnungen wird die Erfindung näher erläutert. Dabei zeigen
- **Fig. 1**: Wagenkasten in der Draufsicht und von der Seite von außen,
- **Fig. 2**: Querschnitte des Wagenkastens entlang der Linien A-A, B-B und C-C,
- **Fig. 3**: Ansicht einer Fügestelle zwischen Dachträger und Dachsegment,
- **Fig. 4**: Ausschnitt und Querschnitt eines Dachträgers,
- **Fig. 5**: Detailansicht eines Dachträgers im Querschnitt,
- **Fig. 6**: Ausschnitt eines Bodenträgers und Querschnitte an verschiedenen Stellen des Bodenträgers,
- **Fig. 7**: Detailansicht eines Bodenträgers im Querschnitt,
- **Fig. 8**: Stirnwand des Wagenkastens im Querschnitt,
- **Fig. 9**: Sprengbild des Wagenkastens,
- **Fig. 10**: Perspektivische Ansicht des Wagenkastens,
- **Fig. 11**: Fenstertyp-Seitenwandsegment und Querschnitt eines Fenstertyp-Seitenwandsegmentes des Wagenkastens,
- **Fig. 12**: Türsäule des Wagenkastens in der Seitenansicht und im Querschnitt,
- **Fig. 13**: Perspektivische Ansicht der Endtraverse des Wagenkastens im Detail,
- **Fig. 14**: Bodensegment des Wagenkastens in einer perspektivischen Sprengansicht, im Querschnitt und in einer perspektivischen Ansicht im zusammengesetzten Zustand,
- **Fig. 15**: Dachsegment des Wagenkastens in einer perspektivischen Sprengansicht, im Querschnitt und in einer perspektivischen Ansicht im zusammengesetzten Zustand,
- **Fig. 16**: Dachverkleidung im Überblick.

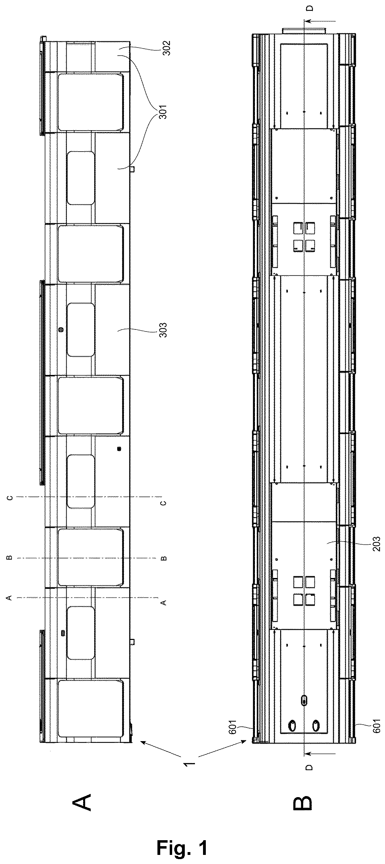

**Figur 1** zeigt den gesamten Wagenkasten 1 in der Seitenansicht von außen (Fig. A) und in der Draufsicht (Fig. B). Die Seitenansicht (Fig. A) zeigt insbesondere die Seitenwand mit den Seitenwandsegmenten 301, wobei diese Endtyp-Seitenwandsegmente 302 und Fenstertyp-Seitenwandsegmente 303 umfassen. Die Draufsicht auf den Wagenkasten 1 (Fig. B) zeigt insbesondere die Dachträger 601 und das Dach, insbesondere mit Heizung-Lüftung-Klimatechniktyp-Dachsegmenten 203.

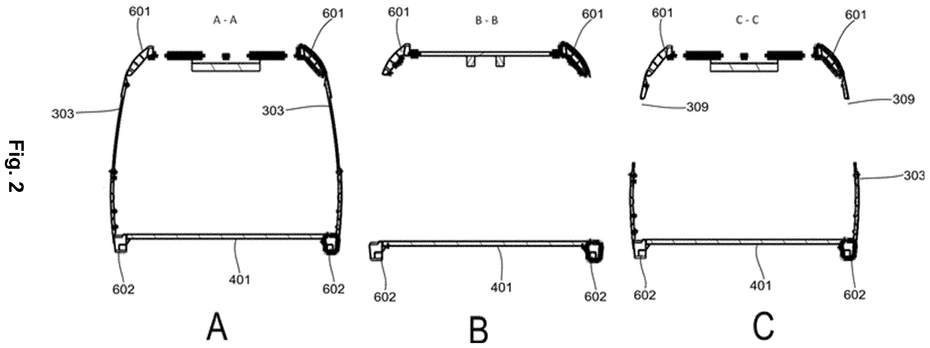

**Figur 2** zeigt einen Querschnitt des Wagenkastens aus Figur 1 entlang der Linie A-A (Abbildung A).

Weiterhin zeigt Figur 2 einen Querschnitt des Wagenkastens aus Figur 1 im Türbereich entlang der Linie B-B (Abbildung B).

Figur 2 zeigt zudem einen Querschnitt des Wagenkastens aus Figur 1 entlang der Linie GC (Abbildung C).

Alle Abbildungen von Figur 2 zeigen insbesondere die Querschnitte der Bodenträger 602 und der Dachträger 601 sowie eines Bodensegmentes 401. Abbildung B zeigt außerdem den Querschnitt eines Fenstertyp-Seitenwandsegmentes 303 im Bereich neben der für ein Fenster vorgesehenen Aussparung, während Abbildung C den Querschnitt eines Fenstertyp-Seitenwandsegmentes 303 im Bereich der Aussparung 309 zeigt.

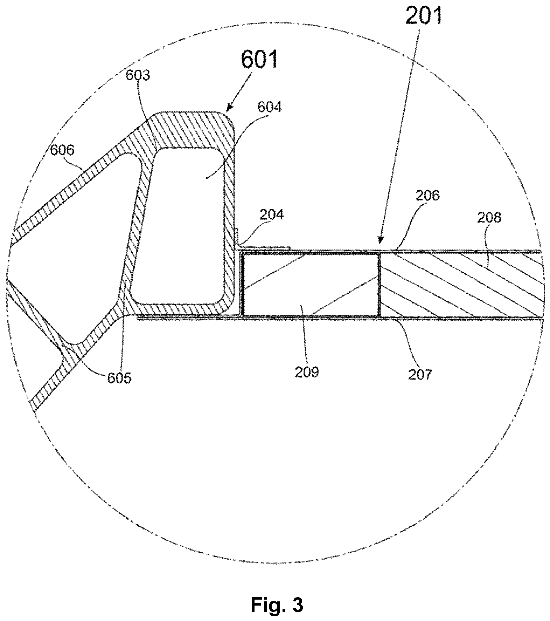

**Figur 3** zeigt die Fügestelle zwischen einem Dachträger 601 und einem Dachsegment 201 im Querschnitt mit Blickrichtung entlang der Wagenkastenlängsachse. Das Dachsegment 201 ist über die Innenwand 207 mit dem durch die Kammern 604 und die Stege 605 gebildeten Mehrkammerhohlprofil des Dachträgers 601 über eine Klebestelle verbunden. Eine weitere Verbindungsstelle zwischen Dachträger 601 und Außenwand 206 des Dachsegmentes 201 besteht über das Winkelelement 204. Das Dachsegment 201 weist Verstärkungselemente 209 und einen Schaumkern 208 auf.

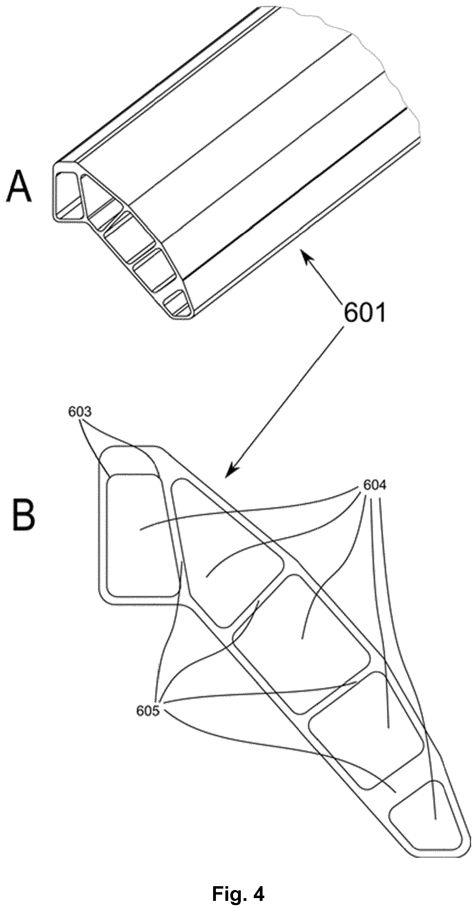

**Figur 4** zeigt in Abbildung A einen Ausschnitt eines Dachträgers 601 des Wagenkastens in perspektivischer Ansicht und den dazugehörigen Querschnitt mit Blickrichtung entlang der Wagenkastenlängsachse (Abbildung B) des Mehrkammerhohlprofils des Dachträgers 601. Zwischen den fünf Kammern 604 sind Stege 605 angeordnet. Des Weiteren weist der Dachträger 601 abgerundete Ecken 603 auf.

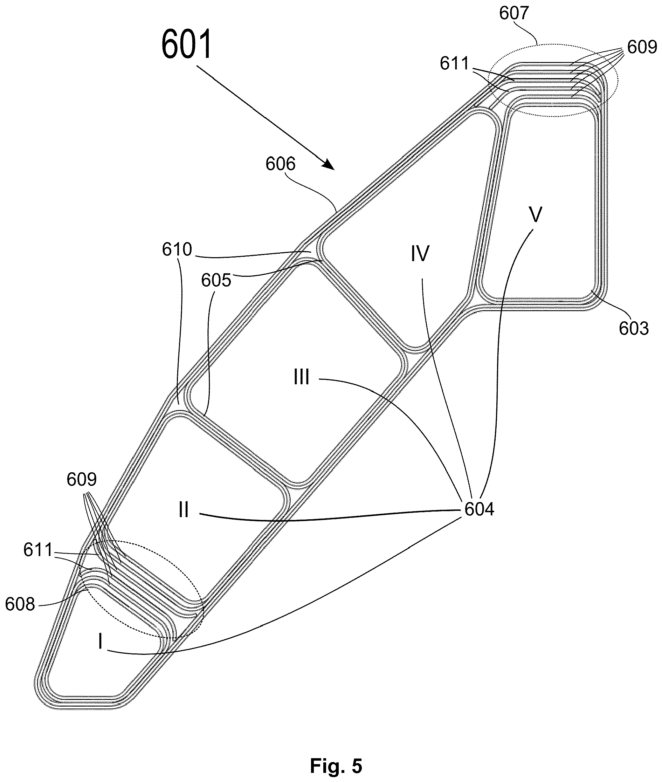

**Figur 5** zeigt eine Ansicht eines Dachträgers 601 analog zu der Darstellung der Fig. 4, Abb. B, mit einer Detaildarstellung des Faserlagenaufbaus. Die Dachträger 601 werden in einem kontinuierlichen hybriden Pultrusionsverfahren (z. B. Pullwinding- oder Pullbraiding-Verfahren) mit 5 Kernen (nicht dargestellt) und einem über die Länge von 21 m konstanten Querschnitt hergestellt. Der Dachträger 601 weist fünf mit römischen Ziffern I bis V gekennzeichnete Hohlkammern 604 auf, jeweils ausgebildet als Polygon und mit gerundeten Ecken 603 ausgeführt. Zumindest eine Kammer (V) ist als rechtwinkliges Trapez ausgeführt. Die Außenwand 606 und die Stege 605 zwischen den einzelnen Kammern 604 sind aus jeweils 4 Lagen quadraxialem Gelege mit einer Einzeldicke von 1,8 mm und einer Faserausrichtung von 0°, -45°, +45° und 90° ausgebildet. Lasttragende Bereiche des Dachträgers 601, der Obergurt 607 und der Untergurt 608, weisen einen differenzierten Lagenaufbau auf. Hier sind zusätzlich zu den 4 Lagen der Außenwand jeweils zwei Zwischenlagen 611 aus quadraxialem Gelege mit einer Dicke von 1,8 mm eingefügt. In den Füllbereichen 609 zwischen den Einzellagen sind jeweils 3 mm dicke Lagen mit unidirektionalen UHM-Fasern (Ultra High Modulus-Fasern) eingebracht. Durch die Zwischenlagen 611 und die mit UHM-Fasern gefüllten Füllbereiche 609 weist der Dachträger 601 im Obergurt 607 und im Untergurt 608 jeweils eine lokale Verstärkung auf. Die Füllzwickel 610, die sich infolge der Abrundung der Ecken 603 ergeben, sind mit unidirektionalen UHM-Fasern gefüllt.

In einem Ausführungsbeispiel weist der Dachträger 601 Dimensionen von 21070 mm x 350 mm x 381 mm (Länge x Breite x Höhe) auf. In diesem Ausführungsbeispiel weist ein Dachträger 601 eine Masse von ca. 490 kg auf.

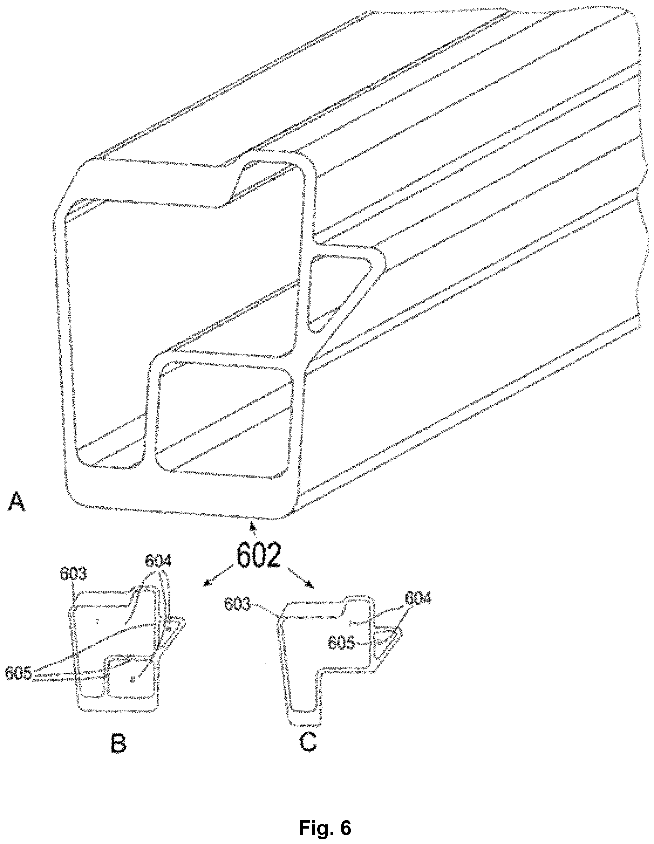

**Figur 6** zeigt einen Ausschnitt eines Bodenträgers 602 des Wagenkastens (Abb. A) und den dazugehörigen Querschnitt mit Blickrichtung in Wagenkastenlängsachse (Abb. B) sowie einen Querschnitt durch einen anderen Bereich des Bodenträgers 602 (Abb. C). Die in Fig. 6, Abb. C gezeigte Querschnittsfläche des Bodenträgers 602 wird gegenüber der in Fig. 6, Abb. B gezeigten Querschnittsfläche des Bodenträgers 602 dadurch verkleinert, dass die mit Ziffer II bezeichnete Kammer 604 spanend entfernt wurde. Zwischen den Kammern 604 sind Stege 605 angeordnet. Der Bodenträger 602 weist abgerundete Ecken 603 auf.

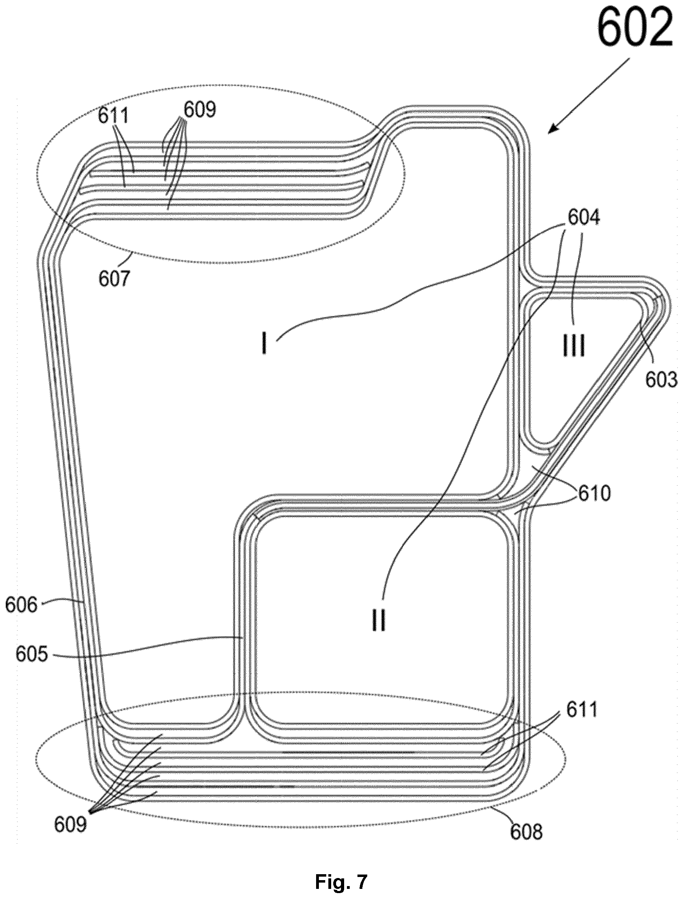

**Figur 7** zeigt einen Querschnitt des Bodenträgers 602 analog dem in Fig. 6, Abb. B dargestellten mit einer Detailansicht des Faserlagenaufbaus. Die Bodenträger 602 werden in einem kontinuierlichen hybriden Pultrusionsverfahren (z. B. Pullwinding- oder Pullbraiding-Verfahren) mit drei Kernen und einem über die Länge von 21 m konstanten Querschnitt hergestellt. Der Bodenträger 602 weist drei durch römische Ziffern I bis III gekennzeichnete Hohlkammern 604 mit vieleckigen Querschnitten auf, wobei eine Kammer (III) mit dreieckigem und zwei Kammern (I, II) mit viereckigem Querschnitt und jeweils gerundeten Ecken 603 ausgeführt sind. Die Außenwand 606 und die Stege 605 zwischen den einzelnen Kammern 604 sind aus jeweils 4 Lagen quadraxialem Gelege mit einer Einzeldicke von 1,8 mm und einer Faserausrichtung von 0°, -45°, +45° und 90° ausgebildet. Lasttragende Bereiche des Bodenträgers 601, der Obergurt 607 und der Untergurt 608, weisen einen differenzierten Lagenaufbau auf. Hier sind zusätzlich zu den 4 Lagen der Außenwand jeweils zwei Zwischenlagen 611 aus quadraxialem Gelege mit einer Dicke von 1,8 mm eingefügt. In den Füllbereichen 609 zwischen den Einzellagen sind jeweils 3 mm dicke Lagen mit unidirektionalen UHM-Fasern (Ultra High Modulus-Fasern) eingebracht. Durch die Zwischenlagen 611 und die mit UHM-Fasern gefüllten Füllbereiche 609 weist der Bodenträger 601 im Obergurt 607 und im Untergurt 608 jeweils eine lokale Verstärkung auf. Die Füllzwickel 610, die sich infolge der Abrundung der Ecken 603 ergeben, sind mit unidirektionalen UHM-Fasern gefüllt.

In einem Ausführungsbeispiel weist ein Bodenträger 602 Dimensionen von 21030 mm x 215 mm x 232 mm (Länge x Breite x Höhe) und eine Masse von ca. 370 kg.

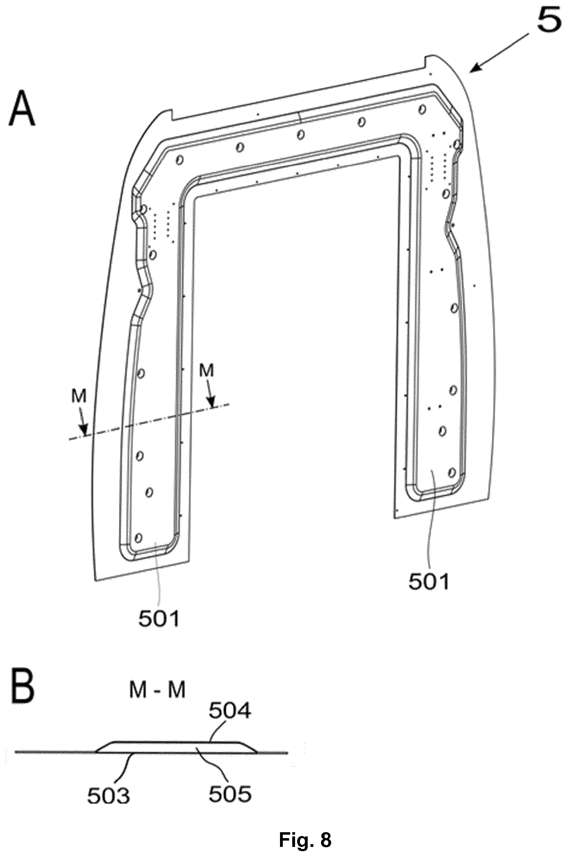

**Figur 8** zeigt in Abb. A eine Baugruppe Stirnwand 5 am Beispiel einer Stirnwand 501 zu einem angrenzenden Wagenkasten sowie in Abb. B deren Querschnitt. Die Stirnwand 501 besteht aus einer jeweils 3 mm dicken Innenwand 504 und Außenwand 503, aufgebaut aus jeweils mehreren Einzellagen bidirektionalen Gewebes mit Faserverlauf in 0°- und 90°-Richtung und einer Dicke von 0,5 mm. Zwischen die Innen- und die Außenwand wird ein flächiger PET-Hartschaumstoffkern 505 eingebracht. Die Stirnwand 501 wird im Handlegeverfahren und einem Autoklavenprozess zur endgültigen Verbindung der Einzelelemente zum fertigen Bauteil gefertigt.

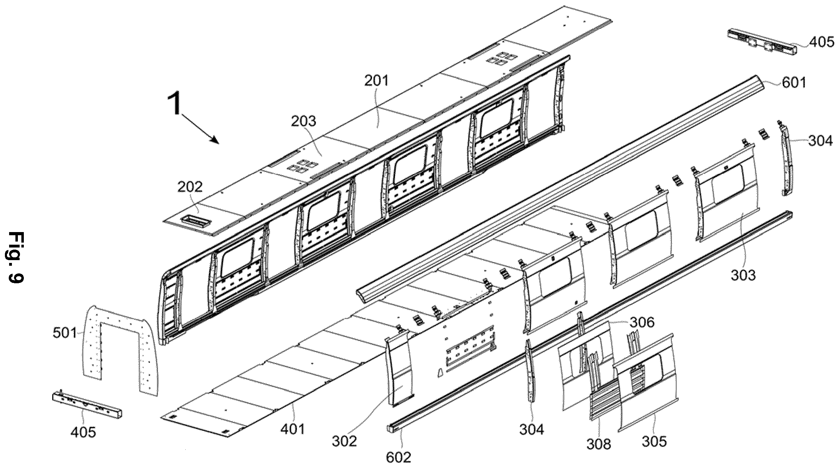

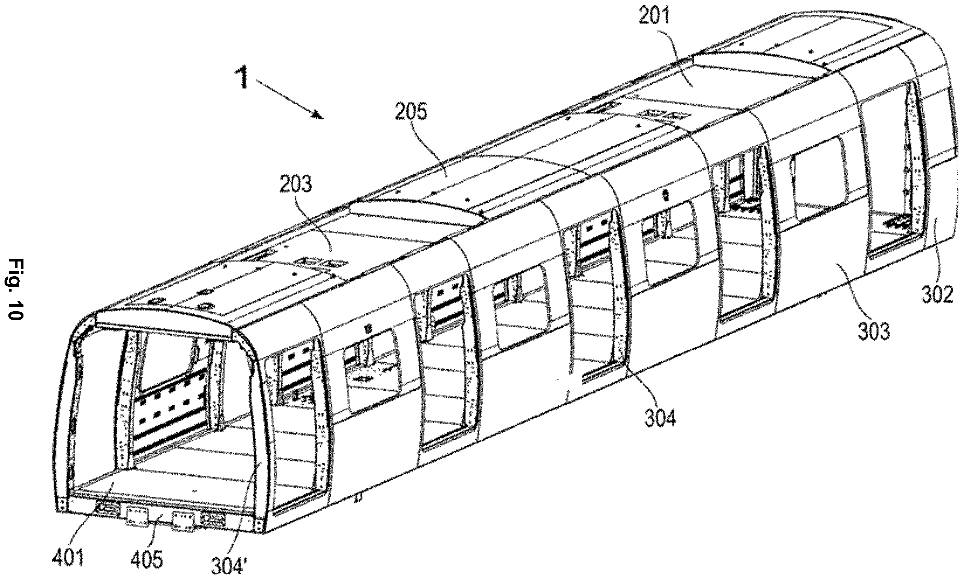

**Figur 9** zeigt ein Sprengbild eines Wagenkastens 1 und **Figur 10** eine perspektivische Ansicht des Wagenkastens 1 der Figur 9, wobei folgende Komponenten des Wagenkastens dargestellt sind: die Dachträger 601 und die Bodenträger 602, die Seitenwandsegmente 301, bestehend aus Innenwand 306 und Außenwand 305 des Seitenwandsegmentes 301 und der mittleren Schicht 307, den Schaumkernsegmenten 308, die Türsäulen 304 und 304', die Bodensegmente 401, die Stirnwand 5, die Endtraversen 405, die einzelnen Dachsegmente, wie Endtyp-Dachsegment 202, Standardtyp-Dachsegment 201 und das Heizung-Lüftung-Klimatechnik-Dachsegment 203. Figur 10 zeigt zusätzlich die Dachverkleidung 205.

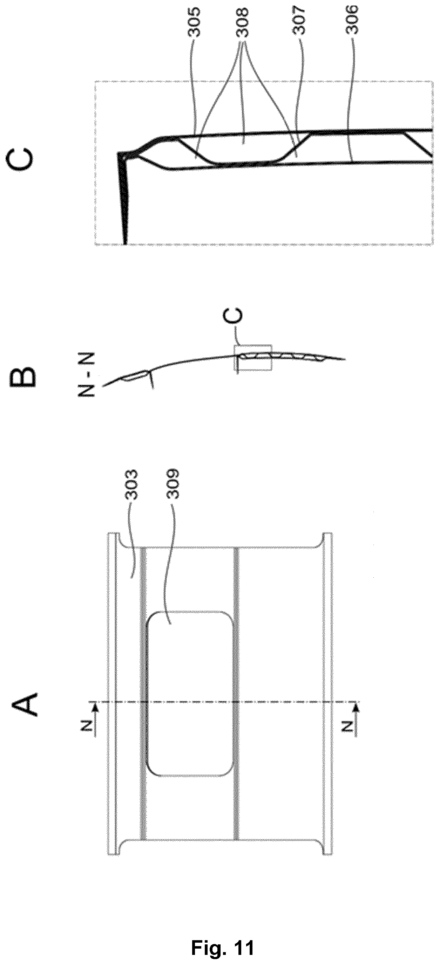

**Figur 11** zeigt ein Fenstertyp-Seitenwandsegment 303 eines Wagenkastens (Fig. 11, Abb. A) und einen dazugehörigen Querschnitt des Seitenwandsegmentes 303 entlang der Schnittlinie N-N (Fig. 11, Abb. B) sowie in Fig. 11, Abb. C eine Detailansicht des Querschnitts (in Fig. 11, Abb. B gekennzeichnet durch eine Umrahmung). Das Fenstertyp-Seitenwandsegment 303 besteht aus einer jeweils 3 mm dicken Innenwand 306 und einer Außenwand 305, bestehend aus jeweils mehreren Einzellagen bidirektionalen Gewebes mit einem Faserverlauf in 0°- und 90°-Richtung und einer Dicke von 0,5 mm pro Einzellage. Zwischen die Innenwand 306 und die Außenwand 305 werden PET-Hartschaumstoffkerne 308 mit trapezförmigen Querschnitt alternierend eingelegt und verklebt, wobei die Kerne 308 im unteren Bereich des Fenstertyp-Seitenwandsegmentes 303 in Fahrzeuglängsrichtung und im oberen Bereich des Fenstertyp-Seitenwandsegmentes 303 um die Aussparung 309 für das Fenster herum vertikal zur Fahrzeuglängsrichtung eingelegt werden. Bei der Klebung handelt es sich um eine klassische Strukturverklebung mit einem Klebespalt von 0,25- 0,40 mm. Zusätzlich dazu läuft eine 3 mm starke Zwischenlage 307 aus bidirektionalem Gewebe alternierend zwischen den Schaumkernen. Die Fenstertyp-Seitenwandsegmente 303 werden im Handlegeverfahren und einem Autoklavenprozess zur endgültigen Verbindung der Einzelelemente zum fertigen Bauteil gefertigt.

Ein Ausführungsbeispiel eines Fenstertyp-Seitenwandsegmentes 303 weist Dimensionen von 3150 mm x 2260 mm x 50 mm (Länge x Breite x Höhe) auf. Dieses Ausführungsbeispiel weist eine Masse von ca. 85 kg auf.

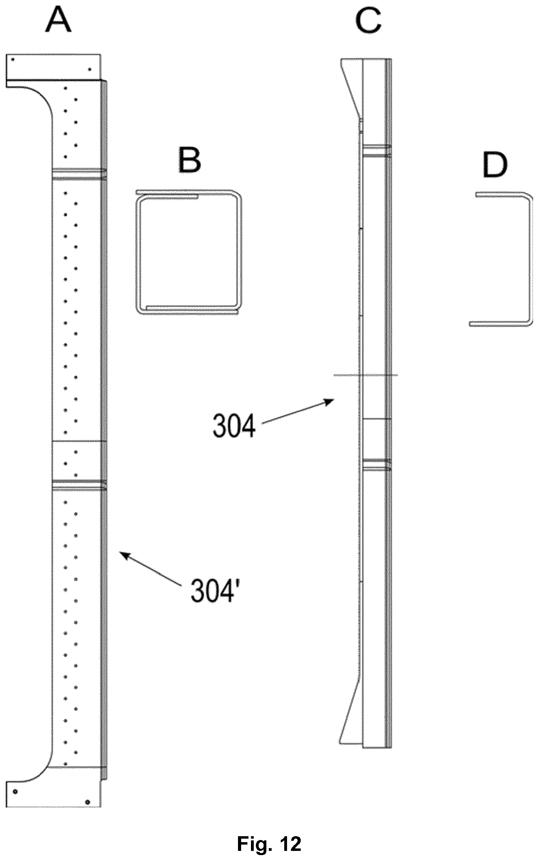

**Figur 12** zeigt zwei Ausführungsbeispiele 304 und 304` einer Türsäule des Wagenkastens in der Seitenansicht (Fig. 12, Abb. A und Fig. 12, Abb. C) und im Querschnitt (Fig. 12, Abb. B und Fig. 12, Abb. D). Die Türsäulen 304, 304` werden mit einer Dicke von 6 mm, bestehend aus Einzellagen bidirektionalen Gewebes, jeweils mit einer Dicke von 0,5 mm pro Einzellage, in einem Pressverfahren hergestellt. In den Türsäulen des Typs 304` können vorteilhaft elektrische Zuleitungen, bspw. für die Steuerung des Türöffnungsmechanismus, angeordnet sein.

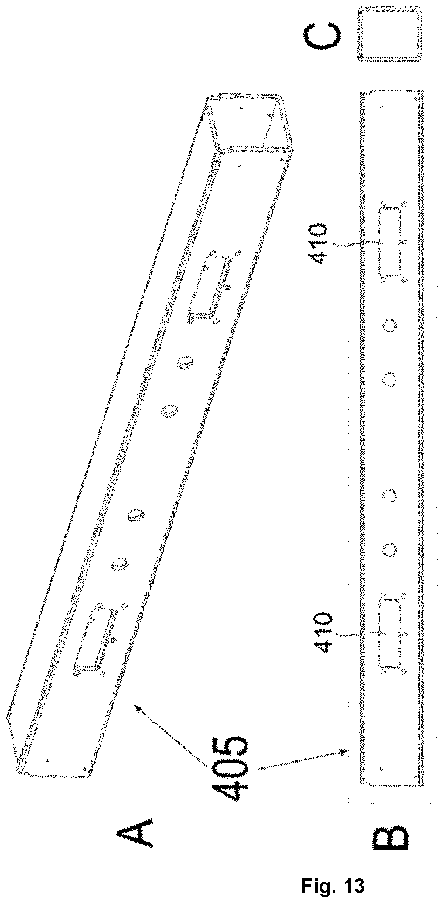

**Figur 13** zeigt eine perspektivische Ansicht (Fig. 13, Abb. A) der Endtraverse 405 des Wagenkastens in einer Ansicht mit Blickrichtung in Wagenkastenlängsachse (Fig. 13, Abb. B) mit den nachträglich eingebrachten Aussparungen 410, die Verbindungselemente aufnehmen, die die Durchführung der Längskräfte auf die Bodenträger über einen Hauptquerträger (nicht dargestellt) sicherstellen. Figur 13, Abb. C zeigt den Querschnitt der Endtraverse 405.

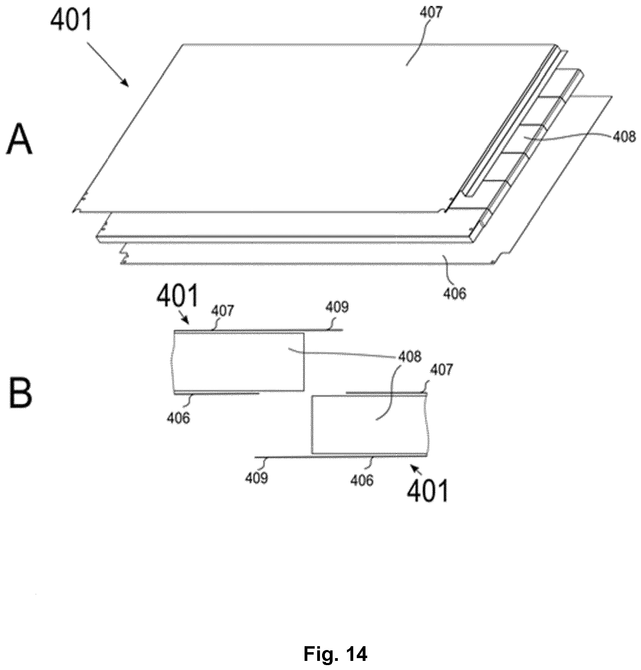

**Figur 14** zeigt ein Bodensegment 401 des Wagenkastens in einer perspektivischen Sprengansicht (Fig. 14, Abb. A) sowie einen Querschnitt durch zwei benachbarte Bodensegmente 401 (Fig. 14, Abb. B) bei der Montage. Das Bodensegment 401 wird mit einer Bauhöhe von 60 mm gefertigt. Das Bodensegment 401 weist eine Innenwand 407 und eine Außenwand 406 auf, jeweils mit einer Gesamtdicke von 2,0 mm, bestehend aus Einzellagen mit einer Dicke von 0,5 mm und einem Flächengewicht von 400 g / m². Die Kohlenstofffasern der Einzellagen sind in Form von bidirektionalem Gewebe in die Kunststoffmatrix aus Epoxidharz durch ein Laminierverfahren mit anschließender Aushärtung im Vakuum eingebracht und verlaufen in 0°- und 90°-Richtung. Zwischen der Innenwand 407 und der Außenwand 406 des Bodensegmentes 401 sind jeweils sechs rechteckige Hohlprofile als Verstärkungselemente 408 quer zur Wagenkastenlängsachse direkt aneinander angeordnet und mit der Innenwand 407 verklebt. Dabei handelt es sich um eine klassische Strukturverklebung mit einem Klebespalt von 0,25 - 0,40 mm. Die rechteckigen Hohlprofile 408 mit einer Größe von 250 mm x 56.5 mm werden mit einer Wandstärke von 1,0 mm in einem Flechtverfahren direkt auf einen strukturierten PET-Hartschaumkern aus Airex T90.60 geflochten (Pullbraiding-Verfahren), wobei die Fasern einen Faserverlauf in ±45°-Richtung aufweisen und in eine duroplastische Matrix aus Epoxidharz eingebettet sind. Die Fertigstellung eines Bodensegmentes 401 erfolgt in einem Pressverfahren, um die Verbindung mit der Innenwand 407 herzustellen und die endgültige Form des Bodensegmentes 401 inklusive der Fügestellen 409 für das Verbinden mit benachbarten Bodensegmenten auszubilden. Fig. 14, Abb. B verdeutlicht die nach der Montage zusätzlich zu der stoffschlüssigen Klebeverbindung bestehende formschlüssige Verbindung zwischen benachbarten Bodensegmenten 401 über die Fügestellen 409.

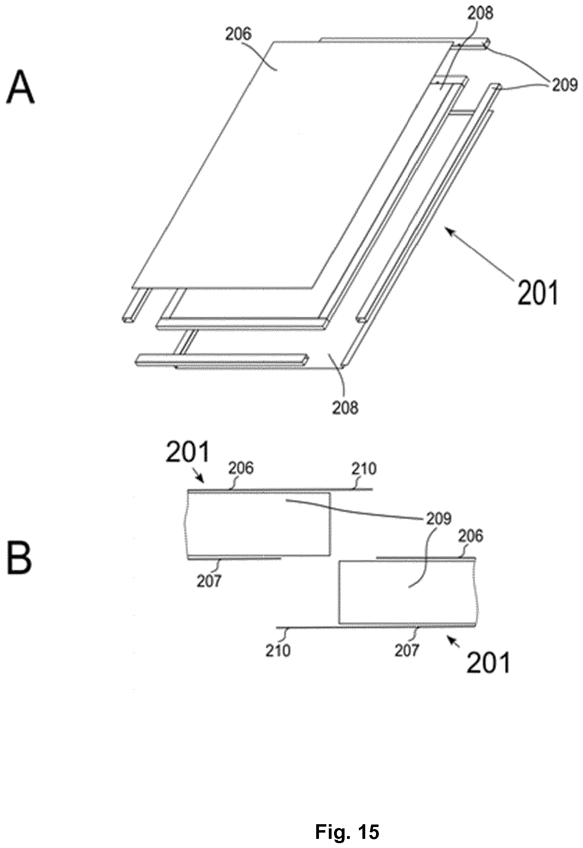

**Figur 15** zeigt ein Standardtyp-Dachsegment 201 des Wagenkastens in einer perspektivischen Sprengansicht (Fig. 15, Abb. A) sowie einen Querschnitt durch zwei benachbarte Dachsegmente 201 (Fig. 15, Abb. B) bei der Montage. Das Dachsegment 201 wird mit einer Bauhöhe von 50 mm gefertigt. Das Dachsegment 201 weist eine Innenwand 207 und eine Außenwand 206 auf, mit einer Gesamtdicke von 1,0 mm bzw. 2,0 mm, bestehend aus Einzellagen mit einer Dicke von 0,5 mm und einem Flächengewicht von 400 g / m². Die Kohlenstofffasern sind in Form von bidirektionalem Gelege in die Kunststoffmatrix aus Epoxidharz eingebracht und verlaufen in 0°- und 90°-Richtung. Zwischen der Innenwand 207 und der Außenwand 206 des Dachsegmentes 201 sind entlang der Außenkanten des Dachsegmentes 201 rechteckige Hohlprofile als Verstärkungselemente 209 angeordnet und mit der Außenwand 206 verklebt. Dabei handelt es sich um eine klassische Strukturverklebung mit einem Klebespalt von 0,25 - 0,40 mm. Die rechteckigen Hohlprofile 209 mit einer Größe von 100 mm x 56,5 mm mit einer Wandstärke von 1,5 mm werden in einem Flechtverfahren direkt auf einen PET-Hartschaumkern geflochten (Pullbraiding-Verfahren), wobei die Fasern einen Faserverlauf in ± 45°-Richtung aufweisen und in eine duroplastische Matrix aus Epoxidharz eingebettet sind. Zwischen der Innenwand 207 und der Außenwand 206 und dem Rahmen aus rechteckigen, mit PET-Schaum gefüllten, Hohlprofilen wird ein flächiger strukturierter PET-Hartschaumkern 208 aus Airex T90.60 angeordnet und mit der Außenwand 206 verklebt. Dabei handelt es sich um eine klassische Strukturverklebung mit einem Klebespalt von 0,25 - 0,40 mm. Die Fertigstellung eines Dachsegmentes 401 erfolgt in einem Pressverfahren, um die Verbindung mit der Innenwand herzustellen und die endgültige Form des Dachsegmentes 401 inklusive der Fügestellen 210 für das Verbinden mit weiteren Dachsegmenten 201 auszubilden. Fig. 15, Abb. B verdeutlicht die nach der Montage zusätzlich zu der stoffschlüssigen Klebeverbindung bestehende formschlüssige Verbindung zwischen benachbarten Dachsegmenten 201 über die Fügestellen 210.

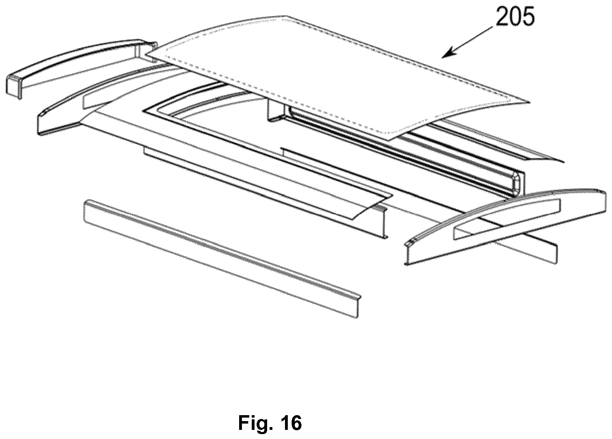

**Figur 16** zeigt eine Sprengzeichnung einer Dachverkleidung 205.

### Bezugszeichen

- 1: Wagenkasten
- 2: Baugruppe Dach
- 201: Standardtyp-Dachsegment
- 202: Endtyp-Dachsegment
- 203: Heizung-Lüftung-Klimatechniktyp-Dachsegment
- 204: Winkelelement
- 205: Dachverkleidung
- 206: Außenwand des Dachsegmentes
- 207: Innenwand des Dachsegmentes
- 208: Schaumkern des Dachsegmentes
- 209: Verstärkungselement des Dachsegmentes
- 210: Fügestelle zu angrenzendem Dachsegment
- 3: Baugruppe Seitenwand
- 301: Seitenwandsegment
- 302: Übergangstyp-Seitenwandsegment
- 303: Fenstertyp-Seitenwandsegment
- 304: Türsäule
- 304`: Türsäule
- 305: Außenwand des Fenstertyp-Seitenwandsegmentes
- 306: Innenwand des Fenstertyp-Seitenwandsegmentes
- 307: Zwischenlage
- 308: Schaumkernsegmente
- 309: Aussparung
- 4: Baugruppe Boden
- 401: Bodensegment
- 402: Zentraltyp-Bodensegment
- 403: Standardtyp-Bodensegment
- 404: Endtyp-Bodensegment
- 405: Endtraverse
- 406: Außenwand des Bodensegmentes
- 407: Innenwand des Bodensegmentes
- 408: Verstärkungselement des Bodensegmentes
- 409: Fügestelle zu angrenzendem Bodensegment
- 410: Durchführung
- 5: Baugruppe Stirnwand
- 501: Stirnwand zu angrenzendem Wagenkasten
- 502: Stirnwand zu angrenzender Führerkabine
- 503: Außenwand der Stirnwand
- 504: Innenwand der Stirnwand
- 505: Schaumkern der Stirnwand
- 6: Längsträger
- 601: Dachträger
- 602: Bodenträger
- 603: gerundete Ecke
- 604: Hohlkammer (vieleckiges Polygon)
- 605: Steg
- 606: Außenwand des Längsträgers
- 607: Obergurt
- 608: Untergurt
- 609: Füllbereich
- 610: Füllzwickel
- 611: Zwischenlagen

## Patentansprüche

1. Wagenkasten (1) für ein Schienenfahrzeug zur Personenbeförderung für den Einsatz im Kurzstrecken betrieb, wobei
- der Wagenkasten (1) mindestens aufweist:
- zwei Seitenwände (3), gebildet aus jeweils einem unteren und einem oberen Längsträger (602, 601), die durch mehrere Seitenwandsegmente (301) und vertikal angeordnete Säulen (304, 304') verbunden sind, und
- ein Dach (2), und
- einen Boden (4), und
- zwei Stirnwände (5) oder eine Stirnwand (5) und ein Kopfmodul,
- die unteren Längsträger (602) der beiden Seitenwände (3) in Wagenkastenlängsrichtung mit dem Boden (4) mittels Verbindungselementen verbunden sind,
- die oberen Längsträger (601) der beiden Seitenwände (3) in Wagenkastenlängsrichtung mit dem Dach (2) mittels Verbindungselementen verbunden sind,
- die unteren und oberen Längsträger (602, 601) als über die gesamte Wagenkastenlänge durchgehende Mehrkammerhohlprofile mit jeweils mindestens zwei Kammern (604) ausgebildet sind,
- die unteren und oberen Längsträger (602, 601) aus faserverstärktem Kunststoff ausgebildet sind,
- die zwei Stirnwände (5) oder eine Stirnwand (5) und ein Kopfmodul senkrecht zur Wagenkastenlängsrichtung kraft- und/oder form- und/oder stoffschlüssig mit den oberen und unteren Längsträgern (601, 602) durch Verbindungselemente verbunden sind,
- die Seitenwände (3), das Dach (2), der Boden (4) und die Stirnwände (5) oder die Stirnwand (5) und das Kopfmodul zumindest teilweise aus faserverstärktem Kunststoffverbund bestehen,
- die Verbindungselemente zumindest teilweise aus Metall bestehen, und
- die Kammern (604) der unteren und oberen Längsträger (602, 601) durch Stege (605) voneinander getrennt sind und von mindestens einer Außenwand (606) umgeben sind, die aus einer oder mehreren Lagen von faserverstärkten Kunststoffverbund besteht.

2. Wagenkasten (1) nach Anspruch 1, **dadurch gekennzeichnet, dass** der faserverstärkte Kunststoffverbund Glas-, Kohlen-, Aramid-, Basalt-, Textil- und/oder Naturfasern in einer Matrix aus thermoplastischen oder duroplastischen Kunststoffen umfasst.

3. Wagenkasten (1) nach einem der Ansprüche 1 oder 2, **dadurch gekennzeichnet, dass** die duroplastischen Kunststoffe Epoxidharze, ungesättigte Polyesterharze, PU-Harze, Vinylester-harze oder Phenolharze umfassen.

4. Wagenkasten (1) nach einem der Ansprüche 1 bis 3, **dadurch gekennzeichnet, dass** die Fasern des faserverstärkten Kunststoffverbundes unidirektional und / oder mehrachsig ausgerichtet sind.

5. Wagenkasten (1) nach einem der Ansprüche 1 bis 4, **dadurch gekennzeichnet, dass** die Fasern des faserverstärkten Kunststoffverbundes als Roving, Vliese, Gelege, Gewebe und / oder Geflechte eingebracht sind.

6. Wagenkasten (1) nach einem der Ansprüche 1 bis 5, **dadurch gekennzeichnet, dass** die Mehrkammerhohlprofile der oberen Längsträger (601) mindestens zwei, besonders bevorzugt drei bis fünf Kammern (604) aufweisen.

7. Wagenkasten (1) nach einem der Ansprüche 1 bis 6, **dadurch gekennzeichnet, dass** das Mehrkammerhohlprofil eines unteren Längsträgers (602) an den Enden des Wagenkastens (1) mindestens zwei, besonders bevorzugt drei Kammern (604) aufweist.

8. Wagenkasten (1) nach einem der Ansprüche 1 bis 7, **dadurch gekennzeichnet, dass** die Mehrkammerhohlprofile der unteren und oberen Längsträger (602, 601) entlang der Wagenkastenlängsachse als voneinander unabhängige Abschnitte ausgebildet sind, welche miteinander an ihren Stirnflächen verbunden sind.

9. Wagenkasten (1) nach einem der Ansprüche 1 bis 8, **dadurch gekennzeichnet, dass** die Kammern (604) der unteren und oberen Längsträger (602, 601) als vieleckige Querschnitte ausgebildet sind, wobei die Querschnitte in den Ecken gerundet ausgeführt sind.

10. Wagenkasten (1) nach einem der Ansprüche 1 bis 9, **dadurch gekennzeichnet, dass** der oberer und untere Längsträger (601, 602) zumindest in einem Bereich der Außenwand (606) und / oder des Steges (605) eine lokale Verstärkung aufweist.

11. Wagenkasten (1) nach Anspruch 10, **dadurch gekennzeichnet, dass** im Bereich der lokalen Verstärkung des oberen und unteren Längsträgers (601, 602) Füllbereiche (609) zwischen den einzelnen Lagen und / oder Füllzwickel (610) mit Endlosfasern gefüllt sind.

12. Wagenkasten (1) nach Anspruch 10 oder 11, **dadurch gekennzeichnet, dass** im Bereich der lokalen Verstärkung des oberen und unteren Längsträgers (601, 602) mindestens eine Zwischenlage angeordnet ist.

13. Wagenkasten (1) nach einem der Ansprüche 1 bis 12, **dadurch gekennzeichnet, dass** die Kammern (604) der unteren Längsträger (602) als dreieckige und / oder viereckige Querschnitte ausgebildet sind, wobei die Querschnitte in den Ecken gerundet ausgeführt sind.

14. Wagenkasten (1) nach einem der Ansprüche 1 bis 13, **dadurch gekennzeichnet, dass** mindestens eine Kammer (604) der oberen Längsträger (601) im Querschnitt als rechtwinkliges Polygon und mindestens eine Kammer (604) der unteren Längsträger (602) im Querschnitt als rechtwinkliges Polygon ausgebildet ist, wobei die Querschnitte in den Ecken gerundet ausgeführt sind.

## Claims

1. A carriage body (1) for a rail vehicle for passenger transport for use in short distance operation, wherein
- the carriage body (1) has at least:
- two side walls (3), formed of a lower and an upper longitudinal beam (602, 601) each that are connected by several side wall segments (301) and vertically arranged pillars (304, 304'), and
- a roof (2), and
- a base (4), and
- two end walls (5) or one end wall (5) and one head module,
- the lower longitudinal beams (602) of the two side walls (3) are connected to the base (4) by means of connecting elements in the longitudinal direction of the carriage body,
- the upper longitudinal beams (601) of the two side walls (3) are connected to the roof (2) by means of connecting elements in the longitudinal direction of the carriage body,
- the lower and upper longitudinal beams (602, 601) are formed as multi-chamber hollow profiles which are continuous over the entire length of the carriage body and each have at least two chambers (604),
- the lower and upper longitudinal beams (602, 601) are formed of fiber-reinforced plastic,
- the two end walls (5) or one end wall (5) and one head module are connected to the upper and lower longitudinal beams (601, 602) perpendicularly to the longitudinal direction of the carriage body with a force fit and/or a form fit and/or an inter-material bond by connecting elements,
- the side walls (3), the roof (2), the base (4) and the end walls (5) or the end wall (5) and the head module consist at least partly of fiber-reinforced plastic composite,
- the connecting elements consist at least partly of metal, and
- the chambers (604) of the lower and upper longitudinal beams (602, 601) are separated from each other by webs (605) and are surrounded by at least one outer wall (606) which consists of one or more plies of fiber-reinforced plastic composite.

2. The carriage body (1) according to claim 1, **characterized in that** the fiber-reinforced plastic composite comprises glass, carbon, aramid, basalt, textile and/or natural fibers in a matrix made from thermoplastics or thermosetting plastics.

3. The carriage body (1) according to either of claims 1 or 2, **characterized in that** the thermosetting plastics comprise epoxy resins, unsaturated polyester resins, PU resins, vinyl ester resins or phenolic resins.

4. The carriage body (1) according to any of claims 1 to 3, **characterized in that** the fibers of the fiber-reinforced plastic composite are oriented unidirectionally and/or multiaxially.

5. The carriage body (1) according to any of claims 1 to 4, **characterized in that** the fibers of the fiber-reinforced plastic composite are introduced as roving, non-woven fabrics, non-crimp fabrics, woven fabrics and/or meshwork.

6. The carriage body (1) according to any of claims 1 to 5, **characterized in that** the multi-chamber hollow profiles of the upper longitudinal beams (601) have at least two, particularly preferably three to five chambers (604).

7. The carriage body (1) according to any of claims 1 to 6, **characterized in that** the multi-chamber hollow profile of a lower longitudinal beam (602) has at least two, particularly preferably three chambers (604) at the ends of the carriage body (1).

8. The carriage body (1) according to any of claims 1 to 7, **characterized in that** the multi-chamber hollow profiles of the lower and upper longitudinal beams (602, 601) are formed along the longitudinal axis of the carriage body as sections that are independent from each other and are connected to each other on their end faces.

9. The carriage body (1) according to any of claims 1 to 8, **characterized in that** the chambers (604) of the lower and upper longitudinal beams (602, 601) are formed as polygonal cross sections, wherein the cross sections are designed rounded in the corners.

10. The carriage body (1) according to any of claims 1 to 9, **characterized in that** the upper and the lower longitudinal beam (601, 602) have a local reinforcement at least in an area of the outer wall (606) and/or of the web (605).

11. The carriage body (1) according to claim 10, **characterized in that**, in the area of the local reinforcement of the upper and the lower longitudinal beam (601, 602), filling areas (609) between the individual plies and/or filling spandrels (610) are filled with continuous filaments.

12. The carriage body (1) according to claim 10 or 11, **characterized in that** at least one intermediate ply is arranged in the area of the local reinforcement of the upper and the lower longitudinal beam (601, 602).

13. The carriage body (1) according to any of claims 1 to 12, **characterized in that** the chambers (604) of the lower longitudinal beams (602) are formed as triangular and/or quadrangular cross sections, wherein the cross sections are designed rounded in the corners.

14. The carriage body (1) according to any of claims 1 to 13, **characterized in that** at least one chamber (604) of the upper longitudinal beams (601) is formed as a right-angled polygon in cross section and at least one chamber (604) of the lower longitudinal beams (602) is formed as a right-angled polygon in cross section, wherein the cross sections are designed rounded in the corners.

## Revendications

1. Caisse de wagon (1) pour un véhicule sur rails pour le transport de passagers pour une utilisation lors d'un fonctionnement sur de courtes distances,
- la caisse de wagon (1) comprenant au moins :
- deux parois latérales (3) formées respectivement par une barre longitudinale inférieure et une barre longitudinale supérieure (602, 601) raccordées par une pluralité de segments de paroi latérale (301) et de colonnes (304, 304') agencées de manière verticale, et
- un toit (2), et
- un fond (4), et
- deux parois frontales (5) ou une paroi frontale (5) et un module de tête,
- les barres longitudinales inférieures (602) des deux parois latérales (3) étant raccordées au fond (4) dans le sens longitudinal de la caisse de wagon par des éléments de raccordement,
- les barres longitudinales supérieures (601) des deux parois latérales (3) étant raccordées au toit (2) dans le sens longitudinal de la caisse de wagon par des éléments de raccordement,
- les barres longitudinales inférieures et supérieures (602, 601) étant réalisées sous forme de profils creux à chambres multiples qui sont continus sur l'ensemble de la longueur de la caisse de wagon et qui présentent chacun au moins deux chambres (604),
- les barres longitudinales inférieures et supérieures (602, 601) étant réalisées en matière plastique renforcée de fibres,
- les deux parois frontales (5) ou une paroi frontale (5) et un module de tête étant raccordés par des éléments de raccordement aux barres longitudinales supérieures et inférieures (601, 602) par coopération de forces et/ou de formes et/ou de matières perpendiculairement au sens longitudinal de la caisse de wagon,
- les parois latérales (3), le toit (2), le fond (4) et les parois frontales (5) ou la paroi frontale (5) et le module de tête étant réalisés au moins partiellement en un composite de matière plastique renforcé de fibres,
- les éléments de raccordement étant réalisés au moins partiellement en métal, et
- les chambres (604) des barres longitudinales inférieures et supérieures (602, 601) étant séparées les unes des autres par des barrettes (605) et étant entourées par au moins une paroi extérieure (606) qui est composée d'une ou de plusieurs couches de composite de matière plastique renforcé de fibres.

2. Caisse de wagon (1) selon la revendication 1, **caractérisée en ce que** le composite de matière plastique renforcé de fibres comprend des fibres de verres, de carbone, d'aramide, de basalte, de textile et/ou naturelles dans une matrice en thermoplastiques ou en matières plastiques thermodurcissables.

3. Caisse de wagon (1) selon l'une des revendications 1 ou 2, **caractérisée en ce que** les matières plastiques thermodurcissables comprennent des résines époxy, des résines de polyester non saturées, des résines PU, des résines d'ester vinylique ou des résines phénoliques.

4. Caisse de wagon (1) selon l'une des revendications 1 à 3, **caractérisée en ce que** les fibres du composite de matière plastique renforcé de fibres sont orientées de manière unidirectionnelle et/ou multiaxiale.

5. Caisse de wagon (1) selon l'une des revendications 1 à 4, **caractérisée en ce que** les fibres du composite de matière plastique renforcé de fibres sont insérées sous forme de stratifils, de non-tissés, de nappes, de tissus et/ou de maillages.

6. Caisse de wagon (1) selon l'une des revendications 1 à 5, **caractérisée en ce que** les profils creux à chambres multiples des barres longitudinales supérieures (601) présentent au moins deux, de manière particulièrement préférée trois à cinq chambres (604).

7. Caisse de wagon (1) selon l'une des revendications 1 à 6, **caractérisée en ce que** les profils creux à chambres multiples d'une barre longitudinale inférieure (602) présentent aux extrémités de la caisse de wagon (1) au moins deux, de manière particulièrement préférée trois chambres (604).

8. Caisse de wagon (1) selon l'une des revendications 1 à 7, **caractérisée en ce que** les profils creux à chambres multiples des barres longitudinales inférieures et supérieures (602, 601) sont réalisés le long de l'axe longitudinal de la caisse de wagon sous forme de tronçons indépendants les uns des autres qui sont raccordés les uns aux autres au niveau de leurs faces frontales.

9. Caisse de wagon (1) selon l'une des revendications 1 à 8, **caractérisée en ce que** les chambres (604) des barres longitudinales inférieures et supérieures (602, 601) sont réalisées sous forme de sections transversales polygonales, les sections transversales étant réalisées arrondies dans les coins.

10. Caisse de wagon (1) selon l'une des revendications 1 à 9, **caractérisée en ce que** la barre longitudinale supérieure et la barre longitudinale inférieure (601, 602) présentent un renforcement local au moins dans une zone de la paroi extérieure (606) et/ou de la barrette (605).

11. Caisse de wagon (1) selon la revendication 10, **caractérisée en ce que** dans la zone du renforcement local de la barre longitudinale supérieure et de la barre longitudinale inférieure (601, 602), des zones de remplissage (609) entre les couches individuelles et/ou des écoinçons de remplissage (610) sont remplis de filaments sans fin.

12. Caisse de wagon (1) selon la revendication 10 ou 11, **caractérisée en ce qu'**au moins une couche intermédiaire est agencée dans la zone du renforcement local de la barre longitudinale supérieure et de la barre longitudinale inférieure (601, 602).

13. Caisse de wagon (1) selon l'une des revendications 1 à 12, **caractérisée en ce que** les chambres (604) des barres longitudinales inférieures (602) sont réalisées sous forme de sections transversales triangulaires et/ou rectangulaires, les sections transversales étant réalisées arrondies dans les coins.

14. Caisse de wagon (1) selon l'une des revendications 1 à 13, **caractérisée en ce qu'**au moins une chambre (604) des barres longitudinales supérieures (601) est réalisée en section transversale sous forme de polygone à angles droits et au moins une chambre (604) des barres longitudinales inférieures (602) est réalisée en section transversale sous forme de polygone à angles droits, les sections transversales étant réalisées arrondies dans les coins.
